(19) **Europäisches Patentamt / European Patent Office / Office européen des brevets**

(11) **EP 4 685 754 A1**

(12) **EUROPEAN PATENT APPLICATION**

published in accordance with Art. 153(4) EPC

(43) Date of publication:
**28.01.2026  Bulletin 2026/05**

(21) Application number: **24810065.3**

(22) Date of filing: **10.04.2024**

(51) International Patent Classification (IPC):
***G06V 10/25*** (2022.01)

(52) Cooperative Patent Classification (CPC):
**G06V 10/25; G06T 3/40; G06T 7/10; G06T 7/11;
G06T 7/70; G06V 10/82;** G06T 2207/20081;
G06T 2207/20084; G06T 2207/20132;
G06V 2201/07; Y02T 10/40

(86) International application number:
**PCT/CN2024/087039**

(87) International publication number:
**WO 2024/239817 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023  CN 202310572375**

(71) Applicant: **Tencent Technology (Shenzhen)
Company Limited
Shenzhen, Guangdong, 518057 (CN)**

(72) Inventor: **LUO, Dazhi
Shenzhen, Guangdong 518057 (CN)**

(74) Representative: **EP&C
P.O. Box 3241
2280 GE Rijswijk (NL)**

(54) **IMAGE PROCESSING METHOD AND APPARATUS, COMPUTER DEVICE AND STORAGE MEDIUM**

(57)    Disclosed in the embodiments of the present application are an image processing method and apparatus, a computer device and a storage medium, which can be applied to artificial intelligence scenarios. The method comprises : performing image detection on a key part of an image undergoing test, so as to obtain a candidate box set; on the basis of said image, performing deduplication processing on candidate boxes in the candidate box set to obtain a set of boxes to be processed, performing position correction on candidate boxes in said set of boxes to obtain adjusted boxes, and according to the adjusted boxes, generating an adjusted-box set and a cropped image set corresponding to the adjusted-box set, the cropped image set comprising N cropped images; respectively performing recognition and segmentation processing on each cropped image amongst the N cropped images to obtain M segmented images associated with the key part; and in the adjusted-box set, separately correcting the adjusted boxes corresponding to the M segmented images to obtain M corrected boxes used for indicating the key part. Using the embodiments of the present application can improve the accuracy of image detection.

FIG. 3

**Description**

CROSS-REFERENCE TO RELATED APPLICATION

This application claims priority to Chinese Patent Application No. 202310572375.4, entitled "IMAGE PROCESSING METHOD AND APPARATUS, COMPUTER DEVICE AND STORAGE MEDIUM" filed with the China National Intellectual Property Administration on May 19, 2023, which is incorporated by reference herein in its entirety.

FIELD OF THE TECHNOLOGY

The disclosure relates to the field of computer technologies, and to an image processing method and apparatus, a computer device, and a storage medium.

BACKGROUND

Image detection is one of key issues in computer vision research, and is an important basis for understanding high-level semantic information of an image. For a portion (for example, a face of an object) of an image, difficulty in detection may be affected by diversity of portions, a change in an angle of view, an illumination condition, occlusion, and a complex background. This means that performing image detection on a portion of the image in a complex environment is a challenging task. In image detection methods performed on a portion of an image, a position of the portion of the image can be identified in a form of a bounding box. In these image detection methods, however, only an image detection task is considered, and insufficient importance is attached to a localization accuracy indicator of the bounding box. Consequently, localization of the bounding box is not sufficiently accurate. A detected bounding box may include some redundant information in addition to the portion, or not all information of the portion is detected. Consequently, accuracy of image detection is seriously affected.

SUMMARY

All embodiments of the disclosure provide an image processing method and apparatus, a computer device, and a storage medium, to improve accuracy of image detection.
An aspect of the embodiments of the disclosure provides an image processing method, including:

obtaining an image, and performing image detection on a first portion of the image to obtain a first box set including at least one first candidate box each marking one region associated with the first portion;

deduplicating the at least one first candidate box based on the image to obtain a second box set including at least one second candidate box, performing position correction on each of the at least one second candidate box to obtain at least one adjusted box, and generating, based on the at least one adjusted box, a third box set including the at least one adjusted box and a cropped image set corresponding to the third box set, the cropped image set including at least one cropped image that is obtained by cropping the image based on the at least one adjusted box, a total quantity of the at least one cropped image is N, and N being a positive integer;

performing recognition and segmentation on each of the at least one cropped image to obtain M segmented images associated with the first portion, and M being a positive integer less than or equal to N; and

correcting, based on coordinate positions of the M segmented images, adjusted boxes in the third box set that correspond to the M segmented images, to generate M corrected boxes indicating the first portion.

An aspect of the embodiments of the disclosure provides an image processing apparatus, including:

an image detection module, configured to obtain an image, and perform image detection on a first portion of the image to obtain a first box set including at least one first candidate box each marking one region associated with the first portion;

a deduplication and adjustment module, configured to deduplicate the at least one first candidate box based on the image to obtain a second box set including at least one second candidate box, perform position correction on each of the at least one second candidate box to obtain at least one adjusted box, and generate, based on the at least one adjusted box, a third box set including the at least one adjusted box and a cropped image set corresponding to the third box set, the cropped image set including at least one cropped image that is obtained by cropping the image based on the at least one adjusted box, a total quantity of the at least one cropped image is N, and N being a positive integer;

a recognition and segmentation module, configured to perform recognition and segmentation on each of the at least one cropped image to obtain M segmented images associated with the first portion, and M being a positive integer less than or equal to N; and

a correction module, configured to correct, based on coordinate positions of the M segmented images, adjusted boxes in the third box set that correspond to the M segmented images, to generate M corrected boxes indicating the first portion.

An aspect of the disclosure provides a computer device, including a processor, a memory, and a network interface.

The processor is connected to the memory and the network interface. The network interface is configured to provide a data communication function. The memory is configured to store a computer program. The processor is configured to invoke the computer program, to cause the computer device to perform the method provided in the embodiments of the disclosure.

An aspect of the embodiments of the disclosure provides a computer-readable storage medium, the computer-readable storage medium having a computer program stored therein, and the computer program being adapted to be loaded and executed by a processor, to cause a computer device with the processor to perform the method provided in the embodiments of the disclosure.

An aspect of the embodiments of the disclosure provides a computer program product, the computer program product including a computer program, and the computer program being stored in a computer-readable storage medium. A processor of a computer device reads the computer program from the computer-readable storage medium, and executes the computer program, to cause the computer device to perform the method in the embodiments of the disclosure.

In the embodiments of the disclosure, a computer device with an image detection function obtains an image (to-be-detected image), and performs image detection on a portion of the to-be-detected image to obtain a first box set (candidate box set). The candidate box set includes at least one first candidate box each marking one region associated with the portion. The candidate box set herein includes at least one bounding box in which a portion initially detected by the computer device is located or a part of the portion is located. To effectively ensure accuracy of the bounding box associated with the portion, after obtaining the candidate box set, the computer device performs secondary adjustment (including deduplication, position correction, and correction) on the candidate box set. First, the computer device deduplicates the at least one first candidate box in the candidate box set based on the to-be-detected image to obtain a second box set (to-be-processed box set) including at least one second candidate box, performs position correction on each of the at least one second candidate box to obtain at least one adjusted box, and generate, based on the at least one adjusted box, a third box set (adjusted box set) including the at least one adjusted box and a cropped image set corresponding to the adjusted box set. The cropped image set herein includes at least one cropped image (e.g., N cropped images) that is obtained by cropping the to-be-detected image based on the at least one adjusted box, and N is a positive integer. Then the computer device may comprehensively consider an internal relationship between an image detection task and an image segmentation task, and re-correct the candidate box set (for example, the adjusted box set) obtained through deduplication and position correction. The computer device performs recognition and segmentation on each of the N cropped images to obtain a segmentation result associated with the portion, and corrects, based on coordinate positions of M segmented images included in the segmentation result, adjusted boxes in the adjusted box set that correspond to the M segmented images, to precisely generate M bounding boxes (for example, corrected boxes) indicating the portion of the to-be-detected image. M is a positive integer less than or equal to N. In the image detection method provided in the embodiments of the disclosure, through deduplication, position correction, and the comprehensive consideration of the internal relationship between the image detection task and the image segmentation task, great importance is attached to a localization accuracy indicator of the bounding box associated with the portion, to obtain the corrected box that can more precisely indicate the portion of the to-be-detected image, so that accuracy of image detection is effectively improved.

BRIEF DESCRIPTION OF THE DRAWINGS

To describe the technical solutions of all embodiments of this disclosure more clearly, the following briefly introduces the accompanying drawings for describing the embodiments. The accompanying drawings in the following description show only some embodiments of the disclosure, and a person of ordinary skill in the art may still derive other drawings from these accompanying drawings without creative efforts.

FIG. 1 is a schematic structural diagram of a network architecture according to embodiments of the disclosure.

FIG. 2 is a schematic diagram of a scenario in which image detection is performed on a portion of a to-be-detected image according to embodiments of the disclosure.

FIG. 3 is a schematic flowchart of an image processing method according to embodiments of the disclosure.

FIG. 4 is a schematic diagram of a scenario in which image detection is performed based on an image detection model according to embodiments of the disclosure.

FIG. 5 is a schematic diagram of a scenario in which a candidate box set is deduplicated according to embodiments of the disclosure.

FIG. 6 is a schematic diagram of a scenario in which position correction is performed based on an image offset adjustment model according to embodiments of the disclosure.

FIG. 7 is a schematic diagram of a scenario in which recognition and segmentation are performed based on an image recognition and segmentation model according to embodiments of the disclosure.

FIG. 8 is a schematic diagram of an image detection framework according to embodiments of the disclosure.

FIG. 9 is a schematic flowchart of a training method for an image detection model according to embodiments of the disclosure.

FIG. 10 is a schematic flowchart of a training method for an image offset adjustment model according to embodiments of the disclosure.

FIG. 11 is a schematic flowchart of a training method for an image recognition and segmentation model according to embodiments of the disclosure.

FIG. 12 is a schematic structural diagram of an image processing apparatus according to embodiments of the disclosure.

FIG. 13 is a schematic diagram of a computer device according to embodiments of the disclosure.

DESCRIPTION OF EMBODIMENTS

The technical solutions in the embodiments including the embodiments of both the claims and the specification (hereinafter referred to as "all embodiments of this application") of the disclosure will be clearly and completely described below with reference to the accompanying drawings. The described embodiments are not to be construed as a limitation to the present disclosure. All other embodiments obtained by a person of ordinary skill in the art without creative efforts shall fall within the protection scope of the present disclosure.

All embodiments of the disclosure provide an iterative localization-type image detection method based on deep learning. The method is applied to the artificial intelligence (AI) field. AI involves a theory, a method, a technology, and an application system that use a digital computer or computing controlled by a digital computer to simulate, extend, and expand human intelligence, perceive an environment, obtain knowledge, and use the knowledge to obtain an optimal result. AI is a comprehensive technology in computer science and attempts to understand the essence of intelligence and produce a new intelligent machine that can react in a manner similar to human intelligence. AI is to study design principles and implementation methods of various intelligent machines, to enable the machines to have functions of perception, inference, and decision-making.

The AI technology is a comprehensive discipline, and relates to a wide range of fields including both hardware-level technologies and software-level technologies. Basic AI technologies may include technologies such as a sensor, a dedicated AI chip, cloud computing, distributed storage, a big data processing technology, an operating/interaction system, and electromechanical integration. AI software technologies include several major directions such as a computer vision (CV) technology, a speech processing technology, a natural language processing technology, machine learning/-deep learning, autonomous driving, and intelligent traffic.

The CV technology is a science that studies how to use a machine to "see", and that uses a camera and a computer to replace human eyes to perform machine vision such as recognition, detection, and measurement on a target, and further perform graphics processing, so that the computer processes the target into an image for human eyes to observe, or an image transmitted to an instrument for detection. As a scientific discipline, CV studies related theories and technologies and attempts to establish an AI system that can obtain information from images or multidimensional data. The CV technology may include image processing, image recognition, image semantic comprehension, image retrieval, optical character recognition (OCR), video processing, video semantic comprehension, content/behavior recognition, three-dimensional (3D) object reconstruction, a 3D technology, virtual reality, augmented reality, simultaneous localization and mapping, autonomous driving, and intelligent traffic.

ML is a multi-field interdiscipline, and relates to a plurality of disciplines such as the probability theory, statistics, the approximation theory, convex analysis, and the algorithm complexity theory, ML involves studying how a computer simulates or implements a human learning behavior to obtain new knowledge or skills, and reorganize an existing knowledge structure, to keep improving its performance. ML is the core of AI, is a basic way to make the computer intelligent, and is applied to various fields of AI. ML and deep learning may include technologies such as an artificial neural network, a belief network, reinforcement learning, transfer learning, inductive learning, and learning from demonstrations.

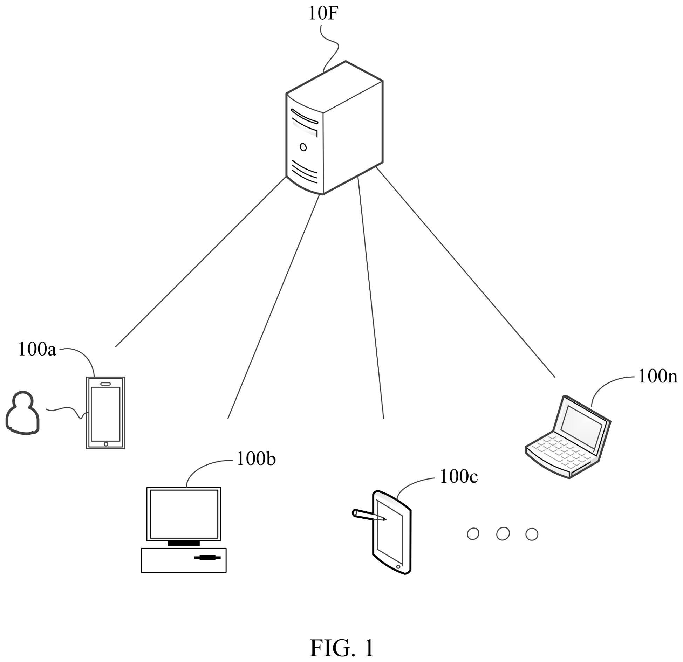

FIG. 1 is a schematic structural diagram of a network architecture according to embodiments of the disclosure. As shown in FIG. 1, the network architecture may include a server 10F and a terminal device cluster. The terminal device cluster may include one or more terminal devices. A quantity of terminal devices is not limited herein. As shown in FIG. 1, the terminal device cluster may include a terminal device 100a, a terminal device 100b, a terminal device 100c, ..., and a terminal device 100n. As shown in FIG. 1, the terminal device 100a, the terminal device 100b, the terminal device 100c, ..., and the terminal device 100n each may establish a network connection to the server 10F, so that each terminal device can exchange data with the server 10F through the network connection. A connection mode of the network connection herein is not limited. A direct or indirect connection may be established through wired communication or wireless communication or in another manner. This is not limited.

Each terminal device in the terminal device cluster may include an intelligent terminal with an image processing function, such as a smartphone, a tablet computer, a notebook computer, a desktop computer, a smart speaker, a smartwatch, an in-vehicle terminal, or a smart television. A service application (for example, an application client) may be installed on each terminal device in the terminal device cluster shown in FIG. 1. When running on each terminal device, the application client may exchange data with the server 10F shown in FIG. 1. The application client may include a social client, a multimedia client (for example, a video client), an entertainment client (for example, a game client), an information stream client, an education client, a livestreaming client, and the like. The application client may be an independent client, or may be an embedded sub-client integrated in a client (for example, a social client, an education client, or a multimedia client). This is not limited herein.

As shown in FIG. 1, the server 10F in all embodiments of the disclosure may be a server corresponding to the application client. The server 10F may be an independent physical server, a server cluster or a distributed system including a plurality of physical servers, or a cloud server that provides a cloud computing service. A quantity of servers is not limited.

In all embodiments of the disclosure, one terminal device may be selected from the plurality of terminals devices shown in FIG. 1 as a service terminal device. For example, in all embodiments of the disclosure, the terminal device 100a shown in FIG. 1 may serve as a service terminal device, and a service application (for example, an application client) may be integrated in the service terminal device. The service terminal device may exchange data with the server 10F through a service data platform corresponding to the application client.

In all embodiments of the disclosure, the computer device with an image detection function may be a server, or may be any terminal device in the terminal device cluster shown in FIG. 1, for example, the terminal device 100a. A form of the computer device is not limited herein.

When obtaining an image (i.e., a to-be-detected image), the computer device may perform image detection on a portion of the to-be-detected image to obtain a candidate box set (also called a first box set), the candidate box set including at least one first candidate box each marking an image detection result (for example, one region associated with the portion). The computer device deduplicates the at least one first candidate box in the candidate box set based on the to-be-detected image to obtain a to-be-processed box set (also called a second box set) including at least one second candidate box, performs position correction on each of the at least one second candidate box in the to-be-processed box set to obtain at least one adjusted box, and generates, based on the at least one adjusted box, an adjusted box set (also called a third box set) including the at least one adjusted box and a cropped image set corresponding to the adjusted box set. The cropped image set includes including at least one (for example, the total quantity is N) cropped image, the at least one cropped image is obtained by cropping the to-be-detected image based on the at least one adjusted box in the adjusted box set, and N is a positive integer. Then the computer device performs recognition and segmentation on each of the N cropped images to obtain a segmentation result associated with the portion, for example, obtain M segmented images associated with the portion, and corrects, based on coordinate positions of the M segmented images, adjusted boxes in the adjusted box set that correspond to the M segmented images, to accurately generate M corrected boxes indicating the portion of the to-be-detected image. Through deduplication, position correction, and a comprehensive consideration of an internal relationship between an image detection task and an image segmentation task, great importance is attached to a localization accuracy indicator of a bounding box in which the portion is located, to obtain the corrected box that can more precisely indicate the portion of the to-be-detected image, so that accuracy of image detection is effectively improved.

The image detection method provided in the embodiments of the disclosure may be widely applied to a plurality of application scenarios. The portion herein is a to-be-detected part of interest. When the portion is a body part of a service object (for example, a person or an animal), the image detection method may be applied to a video production scenario, a social and entertainment scenario, an identity recognition scenario, a security detection scenario, a human-computer interaction scenario, a medical and health scenario, and the like. When the portion is a non-compliant object (for example, some sensitive flags or sensitive symbols), the image detection method may be applied to a non-compliant object detection scenario. When the portion is an object of interest (for example, an advertising brand logo), the image detection method may be applied to an embedding detection scenario and the like.

For example, in the video production scenario, to derive extension functions such as cropping of a video clip collection for a character, calculation of an appearance rate of a character in a video, and display of character-associated information, the computer device may extract a key frame from a video as a to-be-detected image, and then may use the image detection method in the embodiments and an image detection and segmentation technology to not only accurately detect a corrected box in which a portion (for example, a human face) of the to-be-detected image is located, but also obtain a segmentation image (for example, a pixel-level foreground segmented image of the human face that is obtained by removing a background) corresponding to the corrected box. The computer device may use the corrected box and the segmented image corresponding to the corrected box as pre-data for subsequent character recognition, to implement the foregoing extension functions.

In the social and entertainment scenario, to provide richer social and entertainment experience for a user, the computer device may use an image obtained by the computer device in a service application such as a social application, a game application, or a photo processing application as a to-be-detected image, and then may use the image detection method in the embodiments and an image detection and segmentation technology to accurately detect a corrected box in which a portion (for example, a human face) of the to-be-detected image is located, and further implement functions such as selfie beautification, face changing, and face animation.

In the identity recognition scenario, when using an image captured in real time as a to-be-detected image, the computer device may use the image detection method in the embodiments and an image detection and segmentation technology to accurately detect a corrected box in which a portion (for example, a face) of the to-be-detected image is located, and then recognize information of the portion of the corrected box and compare the information with information in a database to implement automatic recognition and authentication. For example, in some service applications (for example, financial applications), facial recognition may be performed by using the image detection method, and subsequent services (for example, application login and asset transfer) are further performed when facial recognition and authentication succeed.

In the security detection scenario, cameras are arranged in public places, business districts, schools, residential districts, and the like. For example, when obtaining an image captured by a camera, the computer device may use the image as a to-be-detected image, and then may perform detection on a portion, for example, an animal face, of the to-be-detected image, perform further image recognition based on a detected corrected box, and compare recognized information with pet information of a lost pet to obtain a behavior path of the lost pet in a timely manner, so that the lost pet can be found more quickly.

In the human-computer interaction scenario, the computer device performs image detection on a human face in a to-be-detected image, and then may implement, based on a detected corrected box, human-computer interaction, for example, interaction functions such as a vending machine, a smart home appliance, and a smart door lock.

In the medical and health scenario, in the medical field, image detection (for example, facial detection) may be performed on a to-be-detected image of a patient, and remote management is implemented based on a detected corrected box through recognition and monitoring in a subsequent process. The image detection technology may be further applied to diagnosis and treatment, for example, diagnosing a facial skin condition of the patient based on a human face included in the corrected box.

The image detection method may be further applied to other scenarios, and examples are not described one by one herein. In the embodiments of the disclosure, a facial (or another biological feature) recognition technology is used. When the embodiments of the disclosure are applied to a product or technology, related data collection, use, and processing processes shall comply with requirements of national laws and regulations. Before facial information is collected, a target object shall be informed of information processing rules, and individual consent shall be obtained from the target object. The facial information is processed in strict compliance with requirements of laws and regulations and personal information processing rules, and technical measures are taken to ensure security of related data.

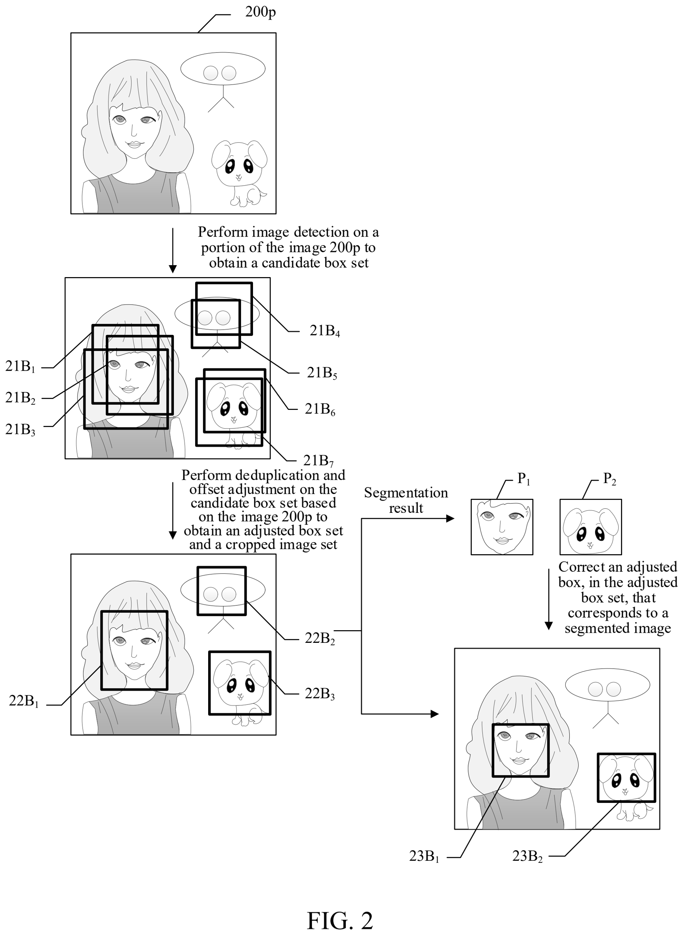

For ease of understanding, FIG. 2 is a schematic diagram of a scenario in which image detection is performed on a portion of a to-be-detected image according to embodiments of the disclosure. As shown in FIG. 2, a computer device in all embodiments of the disclosure may be a computer device with an image detection function. The computer device may be any terminal device in the terminal device cluster shown in FIG. 1, for example, the terminal device 100a, or the computer device may be the server 10F shown in FIG. 1. The computer device is not limited herein.

As shown in FIG. 2, an image 200p may be a to-be-detected image obtained by the computer device. The image 200p may be an image of any key frame in video data, or may be a real-time image captured by the computer device through an image capture component (for example, an image shooting device or a camera), or may be an image (for example, an image in an album) stored on the computer device. Examples are not provided one by one herein.

When obtaining the image 200p, the computer device may include an image detection stage, an image deduplication and offset adjustment stage, and an image recognition and segmentation stage. In the image detection stage, the computer device may first perform image detection on a portion (for example, a face) in the image 200p to obtain a candidate box set. The candidate box set herein is a set including a plurality of bounding boxes that are configured for indicating the portion and that are obtained when the computer device performs image detection on the image 200p for the first time. For example, the candidate box set includes at least one candidate box for marking an image detection result. As shown in FIG. 2, for example, a quantity of candidate boxes in the candidate box set may be 7, and the candidate boxes may include a candidate box $21B_1$, a candidate box $21B_2$, a candidate box $21B_3$, a candidate box $21B_4$, a candidate box $21B_5$, a candidate box $21B_6$, and a candidate box $21B_7$.

Because image detection is performed by using a sliding window, some regions associated with the portion are inevitably duplicate in the candidate box set obtained by the computer device. To effectively ensure a recall rate of image detection, the computer device may retain one of duplicate candidate boxes of the same portion, for example, may perform deduplication. In the image deduplication and offset adjustment stage, the computer device may deduplicate the candidate boxes in the candidate box set based on the image 200p to obtain a to-be-processed box set, perform position correction on a candidate box in the to-be-processed box set to obtain an adjusted box, and generate, based on the adjusted box, an adjusted box set and a cropped image set corresponding to the adjusted box set. The cropped image set may include N cropped images, N is a positive integer, and a cropped image is obtained by cropping the image 200p based on an adjusted box in the adjusted box set.

The deduplication and offset adjustment herein are an image processing method including deduplication and position correction, and a quantity of times of deduplication may be dynamically adjusted based on an actual case. This is not limited herein. For example, the deduplication and offset adjustment may include one round of deduplication and one round of position correction. After the candidate box set is deduplicated, position correction is performed, based on the image 200p, on each candidate box in a candidate box set obtained through deduplication. In some embodiments, the deduplication and offset adjustment may include two rounds of deduplication and one round of position correction. After the candidate box set is deduplicated, position correction is performed, based on the image 200p, on each candidate box in a candidate box set obtained through deduplication, and then an adjusted box obtained through position correction is deduplicated again.

As shown in FIG. 2, for example, a quantity of adjusted boxes in the adjusted box set obtained by the computer device may be 3, and the adjusted boxes may include an adjusted box $22B_1$, an adjusted box $22B_2$, and an adjusted box $22B_3$. The cropped image set corresponding to the adjusted box set may include three cropped images, which may include a cropped image 1, a cropped image 2, and a cropped image 3. The cropped image 1 is a cropped image obtained by cropping the image 200p based on the adjusted box $22B_1$. The cropped image 2 is a cropped image obtained by cropping the image 200p based on the adjusted box $22B_2$. The cropped image 3 is a cropped image obtained by cropping the image 200p based on the adjusted box $22B_3$.

In the image recognition and segmentation stage, the computer device may consider an internal relationship between an image detection task and an image segmentation task, and re-correct, by using a segmentation result obtained through recognition and segmentation, the candidate box set (for example, the adjusted box set) obtained through deduplication and offset adjustment. The segmentation result herein may include M segmented images, M being a positive integer less than or equal to N. The segmented image is an image (for example, a pixel-level foreground segmented image of the face that is obtained by removing a background) obtained by segmenting a recognized cropped image that belongs to the portion.

As shown in FIG. 2, the computer device may perform recognition and segmentation on each of the three cropped images to obtain a segmentation result associated with the portion. The segmentation result may include a segmented image $P_1$ and a segmented image $P_2$. The computer device may separately correct adjusted boxes in the adjusted box set that correspond to the two segmented images. For example, the computer device may correct the adjusted box $22B_1$ in the adjusted box set based on a coordinate position of the segmented image $P_1$ to obtain a corrected box $23B_1$. The computer device further may correct the adjusted box $22B_3$ in the adjusted box set based on a coordinate position of the segmented image $P_2$ to obtain a corrected box $23B_2$. This means that, after correcting the adjusted box set based on the segmented images in the segmentation result, the computer device in all embodiments of the disclosure can obtain two bounding boxes (for example, corrected boxes) indicating the portion of the image 200p, for example, faces of two different service objects exist in the image 200p.

In all embodiments of the disclosure, during image detection on the portion of the image 200p, the image detection stage, the image deduplication and offset adjustment stage, the image recognition and segmentation stage, and the like are connected in series to complete an end-to-end closed-loop design of image detection and image segmentation, so that great importance is attached to a localization accuracy indicator of the bounding box in which the portion is located. According to all embodiments of the disclosure, quick detection can be performed on a complex portion (for example, a human face) in a to-be-detected image, and high precision, a high recall rate, and very high localization accuracy of a bounding box are achieved. A multi-function characteristic is further achieved. A corrected box may be output, or a pixel-level background-removed segmented image may be output.

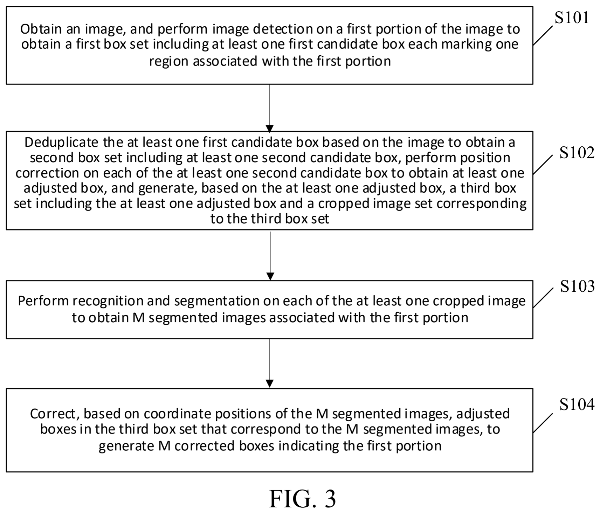

For all embodiments in which a computer device with an image detection function performs deduplication and offset adjustment and comprehensively considers an internal connection between an image detection task and an image segmentation task when performing image detection on a portion of a to-be-detected image to obtain a corrected box indicating the portion of the to-be-detected image, refer to the following descriptions corresponding to FIG. 3 to FIG. 11.

FIG. 3 is a schematic flowchart of an image processing method according to embodiments of the disclosure. As shown in FIG. 3, the method may be performed by a computer device with an image detection function. The computer device may be a terminal device (for example, any terminal device in the terminal device cluster shown in FIG. 1, for example, the terminal device 100a), or may be a server (for example, the server 10F shown in FIG. 1). This is not limited herein. For ease of understanding, all embodiments are described by using an example in which the method is performed by the server. The method may include at least the following operation S101 to operation S104.

Operation S101: Obtain an image, and perform image detection on a first portion of the image to obtain a first box set including at least one first candidate box each marking one region associated with the first portion.

The first box set (also called candidate box set) herein is obtained by the computer device by invoking an image detection model to perform image detection on the first portion of the image (i.e., a portion of a to-be-detected image). The candidate box set includes at least one first candidate box each marking an image detection result (the image detection result may be a region found through image detection, and each of the at least one first candidate box is configured for marking one region associated with the portion, where the portion is within the region, or one part of the portion is within the region and the other part of the portion is outside the region). For example, the candidate box set may include K candidate boxes, K being a positive integer. The image detection model is further configured to determine a predicted category confidence corresponding to each first candidate box in the candidate box set. The predicted category confidence herein is a probability that a category corresponding to the first candidate box is a portion category. A higher predicted category confidence indicates a higher possibility that the first candidate box includes the portion. A model input of the image detection model is the to-be-detected image. A model output of the image detection model indicates whether the portion exists in the to-be-detected image. If the portion exists in the to-be-detected image, a coordinate position of a first candidate box in which the portion is located is output, in a format of [x, y, w, h], x and y being coordinates of a vertex (for example, coordinates of an upper-left corner) of the first candidate box, w being a width corresponding to the first candidate box, and h being a height corresponding to the first candidate box.

The image detection model may further automatically crop the to-be-detected image based on the coordinate position of the candidate box, to output a cropped image including the portion. The image detection model in all embodiments performs detection on the to-be-detected image with very high coverage, to determine whether a suspected portion exists in the to-be-detected image. If a suspected portion exists in the to-be-detected image, a bounding box (for example, a candidate box) in which the portion is located is obtained through cropping and is stored in a picture format (for example, a JPG format), to obtain an image file.

The image detection model is the first stage in the image detection process in all embodiments of the disclosure, and an operation speed of the image detection model largely determines an operation speed of an overall process. Expressiveness of the image detection model is also sufficiently strong for completing a coarse detection task. Based on the foregoing two factors, the image detection model in all embodiments may include two network structures. One is a first network structure in which a model input supports a fixed image size, and the other is a second network structure in which a model input supports any image size. Compared with the first network structure, the second network structure is a fully convolutional network structure, for example, all feature processing layers in the network are convolutional layers.

If a network structure of the image detection model invoked by the computer device is the first network structure, the computer device may perform scaling on the to-be-detected image to scale an image size of the to-be-detected image to the fixed image size (for example, $48 \times 48 \times 3$) supported for reception in the first network structure, and then may directly input the scaled to-be-detected image to the image detection model to perform image detection on the portion of the scaled to-be-detected image by using the image detection model, and then use a plurality of candidate boxes obtained through image detection as the candidate box set.

If a network structure of the image detection model invoked by the computer device is the second network structure, the computer device may directly input the to-be-detected image to the image detection model without taking a large amount of time, to perform image detection on the portion of the to-be-detected image by using the image detection model, and then use a plurality of candidate boxes obtained through image detection as the candidate box set.

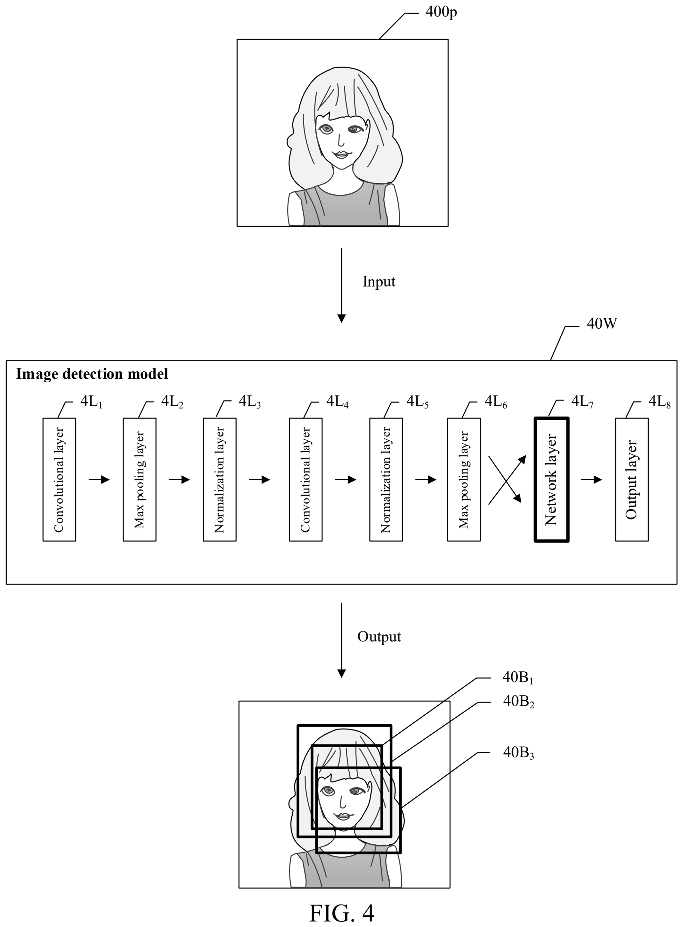

For ease of understanding, FIG. 4 is a schematic diagram of a scenario in which image detection is performed based on an image detection model according to embodiments of the disclosure. As shown in FIG. 4, an image 400p is a to-be-recognized to-be-detected image obtained by a computer device in all embodiments of the disclosure. The computer device may be any terminal device in the terminal device cluster shown in FIG. 1, for example, the terminal device 100a, or the computer device may be the server 10F shown in FIG. 1. The computer device is not limited herein.

When obtaining the image 400p, the computer device may invoke an image detection model 40W shown in FIG. 4. The image detection model 40W may include a convolutional layer $4L_1$, a max pooling layer $4L_2$, a normalization layer $4L_3$, a convolutional layer $4L_4$, a normalization layer $4L_5$, a max pooling layer $4L_6$, a network layer $4L_7$, and an output layer $4L_8$. For example, 64 5×5 convolution kernels may be used at the convolutional layer $4L_1$ and the convolutional layer $4L_4$, with a step of 1; both a filter parameter of the max pooling layer $4L_2$ and a filter parameter of the max pooling layer $4L_6$ may be 3×3, with a step of 2; and the output layer $4L_8$ may be a two-category output node, and may be configured to output a portion category or a non-salient category.

If the network layer $4L_7$ is a fully connected layer, a network structure of the image detection model 40W is a first network structure, for example, a to-be-detected image with a fixed image size may be input. When obtaining the image 400p, the computer device is to perform scaling on the image 400p to scale an image size of the image 400p to the fixed image size (for example, 48×48×3) supported for reception in the first network structure, and then may directly input the scaled image 400p to the image detection model 40W to perform image detection on a portion of the scaled image 400p by using the image detection model 40W, and then may determine a plurality of candidate boxes output by the image detection model 40W as a candidate box set. The candidate box set may include a candidate box $40B_1$, a candidate box $40B_2$, and a candidate box $40B_3$ shown in FIG. 4.

In some embodiments, if the network layer $4L_7$ is a convolutional layer, a network structure of the image detection model 40W is a fully convolutional network structure. The computer device may determine that the network structure of the image detection model 40W is a second network structure. This means that the image detection model 40W may perform sliding detection on an image of any size by using a sliding window with a fixed step, to complete two tasks of image detection: bounding box detection (detection proposal) and classification.

The computer device may directly input the image 400p to the image detection model 40W to perform image detection on a portion of the scaled image 400p by using the image detection model 40W, and then may determine a plurality of candidate boxes output by the image detection model 40W as a candidate box set. The candidate box set may include a candidate box $40B_1$, a candidate box $40B_2$, and a candidate box $40B_3$ shown in FIG. 4. The image detection model 40W can perform sliding window detection on an image of any size, and detect, to the maximum extent, a portion from the image with very high coverage. The image detection model adapts to task characteristics and can detect a portion of any size in an image of any size within very short time, to provide good pre-filtering for a subsequent process, improve overall operation efficiency of the system, and avoid a large quantity of ineffective calculations.

Operation S102: Deduplicate the at least one first candidate box based on the image to obtain a second box set including at least one second candidate box, perform position correction on each of the at least one second candidate box to obtain at least one adjusted box, and generate, based on the at least one adjusted box, a third box set including the at least one adjusted box and a cropped image set corresponding to the third box set, the cropped image set including at least one cropped image that is obtained by cropping the image based on the at least one adjusted box, and a total quantity of the at least one cropped image is N.

The computer device may deduplicate the at least one first candidate box in the candidate box set according to a deduplication rule based on shape-adaptive non-maximum suppression (NMS) to obtain the second box set (also called a to-be-processed box set). The process of deduplicate the at least one first candidate box refers to removing duplicates of the at least one first candidate box. The to-be-processed box set herein includes the at least one second candidate box, and the at least one second candidate box includes a candidate box $X_i$, i being a positive integer less than or equal to H, and H being configured for indicating a total quantity of the at least one second candidate boxes in the to-be-processed box set. The computer device invokes an image offset adjustment model to perform the position correction on the candidate box $X_i$ by using the to-be-detected image to obtain an adjusted box $Y_i$ and a cropped image corresponding to the adjusted box $Y_i$. After obtaining H adjusted boxes, the computer device further deduplicates the H adjusted boxes according to the deduplication rule, determines the third box set (also called an adjusted box set) based on one or more adjusted boxes obtained through deduplicating the H adjusted boxes, and determines the cropped image set based on one or more cropped images corresponding to the one or more adjusted boxes. The cropped image set includes N cropped images that are obtained by cropping the to-be-detected image based on the at least one adjusted box in the adjusted box set, and N being a positive integer.

The image detection model can effectively detect a suspected portion (for example, a suspected human face) region in the to-be-detected image. Due to limitations of network performance and a training data size, the image detection model may incorrectly detect some regions similar to the portion as the portion. In a method of performing image detection by using a sliding window, duplicate facial regions appear inevitably. The computer device may further deduplicate the candidate box set according to the deduplication rule based on shape-adaptive NMS. The deduplication rule is configured for deduplicating candidate boxes, in the candidate box set, in which a suspected portion is located, to retain one of duplicate candidate boxes of the same object if possible while ensuring a recall rate.

NMS means extracting the most representative piece of data from a plurality of pieces of duplicate data and suppressing other duplicate data, for example, suppressing an element that is not a maximum value. This may be understood as a local maximum search. In the NMS algorithm, locally duplicate candidate boxes are filtered by using a condition, to obtain an optimal candidate box. The NMS algorithm is widely applied to object detection algorithms. In view of shape characteristics of a portion (for example, a human face), the portion is not a square with a length equal to a width, but is an approximate ellipse with a length slightly greater than a width. If an NMS algorithm is used to remove duplicate bounding boxes in which the portion is located, some human face boxes that are close to each other but actually indicate two different human faces may be removed. This is because many non-facial regions exist on a left side and a right side in a square face box, and these regions cause misjudgment of the NMS algorithm on an overlapping relationship between two face boxes. In all embodiments of the disclosure, a common NMS algorithm may be improved to obtain a shape-adaptive NMS algorithm, and then deduplication may be performed based on the algorithm.

If the candidate box set includes K candidate boxes, the computer device crops each of the K candidate boxes based on an image cropping rate specified according to the deduplication rule based on shape-adaptive NMS to obtain K cropped boxes. Because the image detection model is further configured to determine a predicted category confidence of each of the K candidate boxes, the computer device sorts the K cropped boxes based on K predicted category confidences to obtain a sorting result. The computer device determines a first cropped box with a highest predicted category confidence in the sorting result, and determines (K-1) cropped boxes other than the first cropped box in the sorting result as a fourth set (also called a to-be-filtered set).

Then the computer device deduplicates the K cropped boxes based on an overlapping degree between the first cropped box and each cropped box in the to-be-filtered set to obtain a fifth box set (also called a retained box set). The computer device determines the overlapping degree between the first cropped box and each cropped box in the to-be-filtered set. If the to-be-filtered set includes an overlapping cropped box with an overlapping degree greater than an overlapping degree threshold, the computer device retains the first cropped box, and filters out the overlapping cropped box from the to-be-filtered set (i.e., filters the fourth set to remove the overlapping cropped box), and then determines a second cropped box with a highest predicted category confidence in the filtered to-be-filtered set, and determines a sixth set (i.e., a new to-be-filtered set) that includes one or more cropped boxes other than the second cropped box in the filtered to-be-filtered set. Then the computer device retains the second cropped box, and continues to deduplicate one or more cropped boxes in the new to-be-filtered set based on an overlapping degree between the second cropped box and each cropped box in the new to-be-filtered set until the new to-be-filtered set is empty, and determines the retained box set including the retained cropped boxes, where the retained box set includes the first cropped box and the second cropped box.

For all embodiments of cropping, by the computer device, the candidate box set according to the deduplication rule based on shape-adaptive NMS, refer to the following formula (1):

$$\begin{cases} x_{1\_new} = x_1 + 0.5 \times narrowrate \times (x_2 - x_1) \\ y_{1\_new} = y_1 \\ x_{2\_new} = x_2 - 0.5 \times narrowrate \times (x_2 - x_1) \\ y_{2\_new} = y_2 \end{cases} \quad (1)$$

$(x_1, y_1)$ is coordinates of a first vertex (for example, coordinates of an upper-left corner) of a candidate box in the candidate box set. $(x_2, y_2)$ is coordinates of a second vertex (for example, coordinates of a lower-right corner) in the candidate box that have a diagonal relationship with the coordinates of the first vertex. *narrowrate* is the image cropping rate specified by the deduplication rule, for example, 0.08. The image cropping rate is an optimal value obtained through a plurality of experiments.

For all embodiments of determining, by the computer device, an overlapping degree between any two bounding boxes (for example, a bounding box 1 and a bounding box 2), refer to the following formula (2):

$$IOU = \frac{C_{12}}{U_{12}} \quad (2)$$

$C_{12}$ indicates an overlapping area between the bounding box 1 and the bounding box 2. $U_{12}$ indicates an area of a union set between the bounding box 1 and the bounding box 2.

Finally, the computer device may perform image expansion on each cropped box in the retained box set based on the image cropping rate to obtain the to-be-processed box set. For all embodiments of performing, by the computer device, image expansion on a cropped box in the retained box set, refer to the following formula (3):

$$\begin{cases} x_{1\_new} = \dfrac{x_1+x_2}{2} - \dfrac{x_2-x_1}{2*(1-narrowrate)} \\ y_{1\_new} = y_1 \\ x_{2\_new} = \dfrac{x_1+x_2}{2} + \dfrac{x_2-x_1}{2*(1-narrowrate)} \\ y_{2\_new} = y_2 \end{cases} \qquad (3)$$

$(x_1, y_1)$ is coordinates of a first vertex (for example, coordinates of an upper-left corner) of a cropped box in the retained box set. $(x_2, y_2)$ is coordinates of a second vertex (for example, coordinates of a lower-right corner) in the cropped box that have a diagonal relationship with the coordinates of the first vertex. narrowrate may be the image cropping rate specified by the deduplication rule, for example, 0.08.

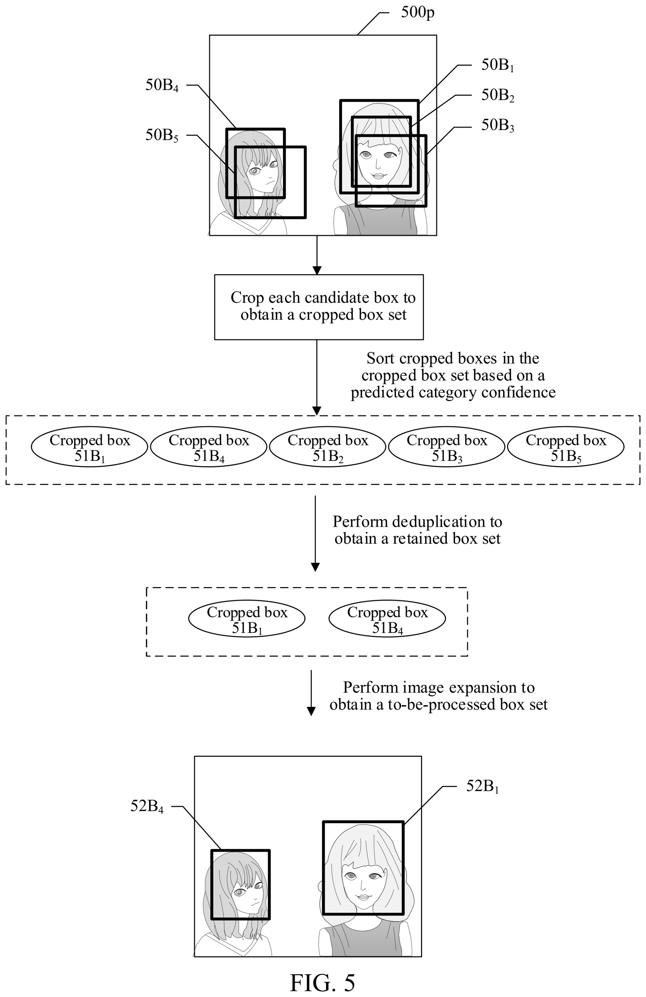

For ease of understanding, FIG. 5 is a schematic diagram of a scenario in which a candidate box set is deduplicated according to embodiments of the disclosure. As shown in FIG. 5, an image 500p is a to-be-recognized to-be-detected image obtained by a computer device in all embodiments. The computer device may be any terminal device in the terminal device cluster shown in FIG. 1, for example, the terminal device 100a, or the computer device may be the server 10F shown in FIG. 1. The computer device is not limited herein.

As shown in FIG. 5, a candidate box set obtained by the computer device after the computer device performs operation S101 may include five candidate boxes, which may include a candidate box $50B_1$, a candidate box $50B_2$, a candidate box $50B_3$, a candidate box $50B_4$, and a candidate box $50B_5$. The image detection model may further output a predicted category confidence corresponding to each of the five candidate boxes, which may include a predicted category confidence 1 (for example, 0.9) corresponding to the candidate box $50B_1$, a predicted category confidence 2 (for example, 0.85) corresponding to the candidate box $50B_2$, a predicted category confidence 3 (for example, 0.82) corresponding to the candidate box $50B_3$, a predicted category confidence 4 (for example, 0.87) corresponding to the candidate box $50B_4$, and a predicted category confidence 5 (for example, 0.81) corresponding to the candidate box $50B_5$.

The computer device may crop (for example, perform a left-right cropping operation on) each of the five candidate boxes based on the formula (1) and the image cropping rate specified by the deduplication rule, to obtain a cropped box set. For example, the computer device may crop the candidate box $50B_1$ based on the formula (1) and the image cropping rate to obtain a cropped box $51B_1$ corresponding to the candidate box $50B_1$. By analogy, the computer device may obtain a cropped box $51B_2$ corresponding to the candidate box $50B_2$, a cropped box $51B_3$ corresponding to the candidate box $50B_3$, a cropped box 51B4 corresponding to the candidate box $50B_4$, and a cropped box $51B_5$ corresponding to the candidate box $50B_5$.

The computer device may sort the five cropped boxes in the cropped box set based on the five predicted category confidences to obtain a sorting result. For example, the sorting result may be the cropped box $51B_1$, the cropped box $51B_4$, the cropped box $51B_2$, the cropped box $51B_3$, and the cropped box $51B_5$ shown in FIG. 5. The computer device may determine a cropped box with a highest predicted category confidence in the sorting result as a first cropped box (for example, the cropped box $51B_1$), and determine four cropped boxes in the sorting result other than the first cropped box as a to-be-filtered set (for example, the cropped box $51B_4$, the cropped box $S1B_2$, the cropped box $51B_3$, and the cropped box $S1B_5$).

The computer device may determine, based on the formula (2), an overlapping degree between the cropped box $51B_1$ and each cropped box in the to-be-filtered set, which may include an overlapping degree (for example, 0) between the cropped box $51B_1$ and the cropped box $51B_4$, an overlapping degree (for example, 0.7) between the cropped box $51B_1$ and the cropped box $51B_2$, an overlapping degree (for example, 0.5) between the cropped box $51B_1$ and the cropped box $51B_3$, and an overlapping degree (for example, 0) between the cropped box $51B_1$ and the cropped box $51B_5$.

Then the computer device may determine, based on an overlapping degree threshold, whether an overlapping cropped box exists in the to-be-filtered set. The overlapping cropped box herein is a cropped box whose overlapping degree with the first cropped box reaches the overlapping degree threshold (for example, 0.4). The overlapping degree threshold may be dynamically adjusted based on a case, and is not limited.

Because both the overlapping degree between the cropped box $S1B_1$ and the cropped box $51B_2$ and the overlapping degree between the cropped box $51B_1$ and the cropped box $51B_3$ reach the overlapping degree threshold, the computer device may determine the cropped box $51B_2$ and the cropped box $51B_3$ as overlapping cropped boxes, and then may retain the cropped box $51B_1$ and filter out the overlapping cropped boxes from the to-be-filtered set to obtain a to-be-filtered set (for example, the cropped box $51B_4$ and the cropped box $51B_5$) through filtering.

Because the to-be-filtered set obtained through filtering is not empty, the computer device may continue to traverse the to-be-filtered set obtained through filtering, to determine whether an overlapping cropped box exists in the to-be-filtered set obtained through filtering. The computer device may use a cropped box with a highest predicted category confidence in the to-be-filtered set obtained through filtering as a second cropped box (for example, the cropped box $51B_4$), and use a cropped box other than the second cropped box as a new to-be-filtered set (for example, the cropped box $51B_5$).

Because one cropped box exists in the new to-be-filtered set, the computer device may determine an overlapping degree (for example, 0.8) between the cropped box $51B_4$ and the cropped box $51B_5$ based on the formula (2). Because the overlapping degree between the cropped box $51B_4$ and the cropped box $51B_5$ reaches the overlapping degree threshold, the computer device may determine the cropped box $51B_5$ as an overlapping cropped box, and then may retain the cropped box $51B_4$, and deduplicate the overlapping cropped box in the new to-be-filtered set. Because a to-be-filtered set obtained through deduplication is empty, it can be determined that the computer device has traversed all of the cropped box set. The computer device may determine the retained first cropped box (for example, the cropped box $51B_1$) and the retained second cropped box (for example, the cropped box $51B_4$) as a retained box set.

After filtering out the overlapping cropped boxes, the computer device may re-expand each cropped box in the retained box set to a square bounding box. For example, the computer device may perform image expansion on the cropped box $51B_1$ based on the formula (3) and the image cropping rate to obtain a candidate box $52B_1$ shown in FIG. 5. The computer device may perform image expansion on the cropped box $51B_4$ based on the formula (3) and the image cropping rate to obtain a candidate box $52B_4$ shown in FIG. 5. The computer device may determine the candidate box $52B_1$ and the candidate box $52B_4$ as a to-be-processed box set.

In all embodiments of the disclosure, the NMS algorithm is replaced with the shape-adaptive NMS algorithm, to avoid NMS misoperation to some extent. According to the deduplication rule based on shape-adaptive NMS, duplicate candidate boxes in the candidate box set can be deduplicated, to retain one or more most representative candidate boxes. Because the deduplication rule is optimized in a shape-adaptive manner based on a special shape of a portion (for example, a human face), the optimization better adapts to service characteristics, and the deduplication rule can retain face boxes of different objects that are excessively close to each other while effectively deduplicating face boxes belonging to the same object. This greatly reduces a quantity of face boxes that may be processed in a subsequent process, and ensures detection coverage.

The computer device may invoke the image offset adjustment model to perform offset prediction on each candidate box in the to-be-processed box set to iteratively correct a position of each candidate box. A model body structure of the image offset adjustment model herein may be implemented based on a convolutional neural network, an attention model, or the like. The model body structure of the image offset adjustment model is not limited herein.

A model input of the image offset adjustment model is the to-be-detected image and a coordinate position of region coordinates in which each candidate box in the to-be-processed box set is located (for example, a coordinate position of the candidate box). A model output of the image offset adjustment model is a candidate box on which position correction has been performed (for example, an adjusted box). The image offset adjustment model may output coordinates of a region in which the adjusted box is located, and a format of a coordinate position of the adjusted box is [x, y, w, h], x and y being coordinates of a vertex (for example, coordinates of an upper-left corner) of the adjusted box, w being a width corresponding to the adjusted box, and h being a height corresponding to the adjusted box.

For example, the computer device may invoke the image offset adjustment model, and then may perform offset prediction on a candidate box $X_i$ by using the to-be-detected image to obtain a first regression parameter. Then the computer device may perform position correction on the candidate box $X_i$ based on the first regression parameter to obtain a first adjusted box corresponding to the candidate box $X_i$, and then may determine, based on a relationship between the first regression parameter and a regression parameter threshold range, whether to end adjustment. The regression parameter threshold range herein may be dynamically adjusted according to an actual requirement, and is not limited herein. For example, the regression parameter threshold range may be [-2, 2].

If the first regression parameter belongs to the regression parameter threshold range, the computer device may determine to end adjustment, and then may directly determine the first adjusted box corresponding to the candidate box $X_i$ as an adjusted box $Y_i$ corresponding to the candidate box $X_i$. In some embodiments, if the first regression parameter does not belong to the regression parameter threshold range, the computer device may determine that position correction further may be performed on the first adjusted box. The computer device may invoke the image offset adjustment model to perform, by using the to-be-detected image, offset prediction on the first adjusted box corresponding to the candidate box $X_i$, to obtain a second regression parameter; and then may adjust, based on the second regression parameter, the first adjusted box corresponding to the candidate box $X_i$, to obtain a second adjusted box corresponding to the candidate box $X_i$. If the second regression parameter belongs to the regression parameter threshold range, the computer device determines the second adjusted box corresponding to the candidate box $X_i$ as an adjusted box $Y_i$ corresponding to the candidate box $X_i$, and then may crop the to-be-detected image based on a coordinate position of the adjusted box $Y_i$ to obtain a cropped image corresponding to the adjusted box $Y_i$.

For all embodiments of adjusting, by the computer device, a candidate box based on a regression parameter (for example, bbr), refer to the following formulas (4) and (5):

$$\text{bbr} = [x_{\text{offset}}, y_{\text{offset}}, w_{\text{offset}}, h_{\text{offset}}] \qquad (4)$$

$$\begin{cases} \text{x} = x_0 + x_{\text{offset}} \\ \text{y} = y_0 + y_{\text{offset}} \\ \text{w} = w_0 + w_{\text{offset}} \\ \text{h} = h_0 + h_{\text{offset}} \end{cases} \tag{5}$$

$x_0$ and $y_0$ indicates coordinates of a vertex (for example, coordinates of an upper-left corner) of a current candidate box. $w_0$ is a width corresponding to the candidate box. $h_0$ is a height corresponding to the candidate box. bbr is a regression parameter obtained by performing offset prediction on a coordinate position of the current candidate box by using the image offset adjustment model. $x_{\text{offset}}$ is a predicted offset obtained for a corresponding coordinate (for example, a horizontal coordinate) of $x_0$. $y_{\text{offset}}$ is a predicted offset obtained for a corresponding coordinate (for example, a vertical coordinate) of $y_0$. $w_{\text{offset}}$ is a predicted offset obtained for the width. $h_{\text{offset}}$ is a predicted offset obtained for the height.

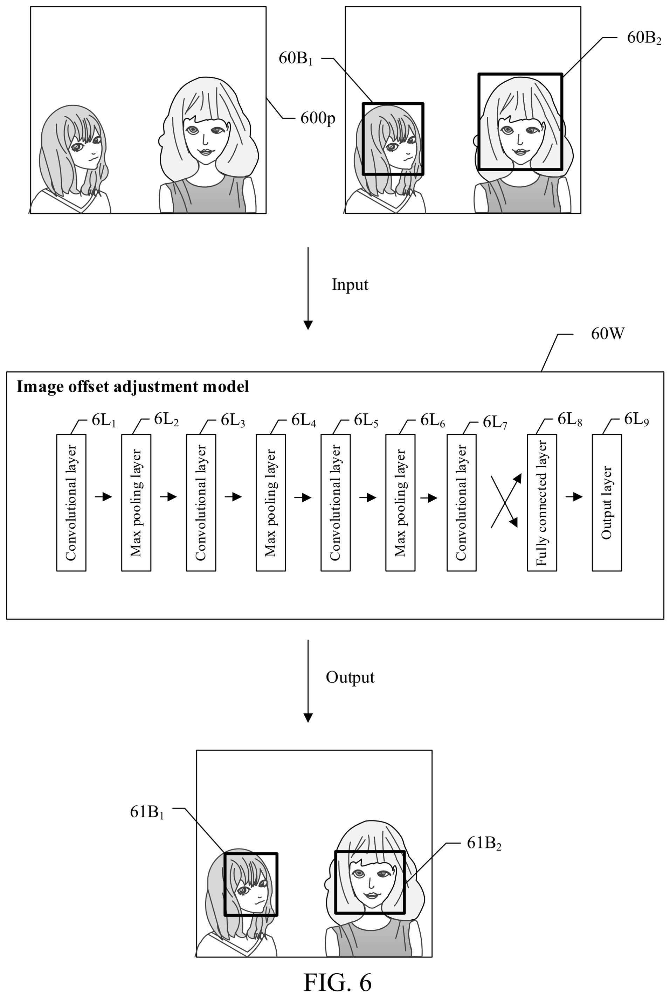

For ease of understanding, FIG. 6 is a schematic diagram of a scenario in which position correction is performed based on an image offset adjustment model according to embodiments of the disclosure. As shown in FIG. 6, an image 600p is a to-be-recognized to-be-detected image obtained by a computer device in all embodiments. Both a candidate box $60B_1$ and a candidate box $60B_2$ in a to-be-processed box set are obtained by the computer device by deduplicating a candidate box set.

As shown in FIG. 6, after deduplicating the candidate box set, the computer device may invoke an image offset adjustment model 60W. For example, a network structure of the image offset adjustment model 60W is different from that of the image detection model, and difficulty in an offset mode classification task is higher than that in a portion classification task. A plurality of convolution operations are added to the network, to extract a feature with stronger expressiveness. The image offset adjustment model 60W may receive a $48\times48\times3$ data input, and output a 45-category offset mode classification result.

As shown in FIG. 6, the image offset adjustment model 60W may include a convolutional layer $6L_1$, a max pooling layer $6L_2$, a convolutional layer $6L_3$, a max pooling layer $6L_4$, a convolutional layer $6L_5$, a max pooling layer $6L_6$, a convolutional layer $6L_7$, a fully connected layer 6L8, and an output layer $6L_9$. For example, 32 $3\times3$ convolution kernels may be used at the convolutional layer $6L_1$, with a step of 1; a filter parameter of the max pooling layer $6L_2$ may be $3\times3$, with a step of 2; 64 $3\times3$ convolution kernels may be used at the convolutional layer $6L_3$, with a step of 1; a filter parameter of the max pooling layer $6L_4$ may be $3\times3$, with a step of 1; 64 $3\times3$ convolution kernels may be used at the convolutional layer $6L_5$, with a step of 1; a filter parameter of the max pooling layer $6L_6$ may be $2\times2$, with a step of 2; 128 $2\times2$ convolution kernels may be used at the convolutional layer $6L_7$, with a step of 1; an output size of the fully connected layer $6L_8$ may be $1\times256$; and the output layer $6L_9$ may be a 45-category output node, for example, is configured to output 45 offset mode categories.

The computer device may directly input the two candidate boxes in the to-be-processed box set and the image 600p to the image offset adjustment model 60W, to separately perform offset prediction on the two candidate boxes to obtain predicted regression parameters respectively corresponding to the two candidate boxes.

For ease of understanding, Table 1 is an offset adjustment table determined based on an image offset adjustment model according to all embodiments of the disclosure. In the offset adjustment table shown in Table 1, results of two dimensions may be included for any candidate box. One is a predicted category confidence of the candidate box that is determined by the image offset adjustment model, and the other is a regression parameter of the candidate box that is determined by the image offset adjustment model. Details are shown in Table 1.

Table 1

| Predicted category confidence of a candidate box | Coordinate position of the candidate box | Predicted regression parameter of the candidate box |
| --- | --- | --- |
| Confidence 1 of the candidate box $60B_1$ | $[x_1, y_1, w_1, h_1]$ | bbr1: [10, -12, 4, 7] |
| Confidence 2 of the candidate box $60B_2$ | $[x_2, y_2, w_2, h_2]$ | bbr2: [1, 0, 2, 9] |

For example, for the candidate box $60B_1$, a coordinate position of the candidate box $60B_1$ is $[x_1, y_1, w_1, h_1]$, and a predicted regression parameter of the candidate box $60B_1$ is bbr1. The computer device may perform position correction on the coordinate position of the candidate box $60B_1$ based on the formula (5) and the regression parameter bbr1 (for example, a first regression parameter), and then may determine a position-corrected candidate box $60B_1$ as a first adjusted box corresponding to the candidate box $60B_1$.

Due to complexity of a bounding box in which a portion is located, performing position fine-adjustment once may not achieve optimal effect. The computer device may determine, based on the first regression parameter, whether to input the first adjusted box to the image offset adjustment model 60W shown in FIG. 6 again for next fine adjustment (for example, position correction). In all embodiments of the disclosure, position correction is cyclically and iteratively performed on a candidate box to achieve more precise localization, so that a finally obtained adjusted box has very high localization accuracy. A small portion can be accurately localized, and adjacent or partially overlapping portions can be effectively distinguished.

It can be learned from Table 1 that the regression parameter bbr1 does not belong to the regression parameter threshold range. The computer device may input the first adjusted box corresponding to the candidate box $60B_1$ to the image offset adjustment model 60W shown in FIG. 6 again, to perform offset prediction on the first adjusted box corresponding to the candidate box $60B_1$ again by using the image 600p, to obtain a new predicted regression parameter (for example, a second regression parameter); and then may adjust, based on the second regression parameter, the first adjusted box corresponding to the candidate box $60B_1$, to obtain a second adjusted box corresponding to the candidate box $60B_1$, until a new predicted regression parameter belongs to the regression parameter threshold range. It is considered that fine adjustment (position correction) may not be performed. A finally output adjusted box (for example, the second adjusted box) may be determined as an adjusted box (for example, an adjusted box $61B_1$ shown in FIG. 6) corresponding to the candidate box $60B_1$. The computer device may crop the image 600p based on the adjusted box $61B_1$ to obtain a cropped image corresponding to the adjusted box $61B_1$.

In all embodiments of the disclosure, with reference to the implementation of performing offset adjustment on the candidate box $60B_1$, offset adjustment may be performed on the candidate box $60B_2$ to obtain an adjusted box (for example, an adjusted box $61B_2$ shown in FIG. 6) corresponding to the candidate box $60B_2$ and a cropped image corresponding to the adjusted box $61B_2$.

To effectively ensure accuracy of a bounding box in which a portion is located, during deduplication (for example, first deduplication) of a candidate box set, a loose parameter may be used (for example, an overlapping degree threshold is set to a large value). Two candidate boxes that overlap to some extent may still exist among H candidate boxes in a to-be-processed box set obtained through the first deduplication. After offset adjustment is performed by using the image offset adjustment model, candidate boxes in which portions of two different objects are located are adjusted to be further away from each other, and candidate boxes in which portions of two same objects are located are adjusted to be closer to each other. This means that overlapping adjusted boxes may still exist in an adjusted to-be-processed box set. To effectively improve efficiency of subsequent detection, when obtaining H adjusted boxes, the computer device may perform deduplication again, and then may determine an adjusted box obtained through deduplication as an adjusted box set corresponding to the candidate box set, and determine a cropped image corresponding to the adjusted box obtained through deduplication as a cropped image set corresponding to the adjusted box set, to use the cropped image set as an input of a next model (for example, an image recognition and segmentation model).

Operation S103: Perform recognition and segmentation on each of the at least one cropped image to obtain M segmented images associated with the first portion.

The computer device determines a cropped image (i.e., a to-be-processed image) from the N cropped images, and then invokes the image recognition and segmentation model to perform recognition on the to-be-processed image by using an image classification branch in the image recognition and segmentation model to obtain a predicted category confidence of the to-be-processed image, and then eliminates a non-salient portion in the to-be-processed image by using an image segmentation branch in the image recognition and segmentation model to obtain a segmented image corresponding to the to-be-processed image. If the predicted category confidence of the to-be-processed image is greater than a confidence threshold, it is considered that the to-be-processed image belongs to a portion category. The computer device determines the segmented image corresponding to the to-be-processed image as the segmentation result associated with the portion. The segmentation result includes M segmented images, and M is a positive integer less than or equal to N.

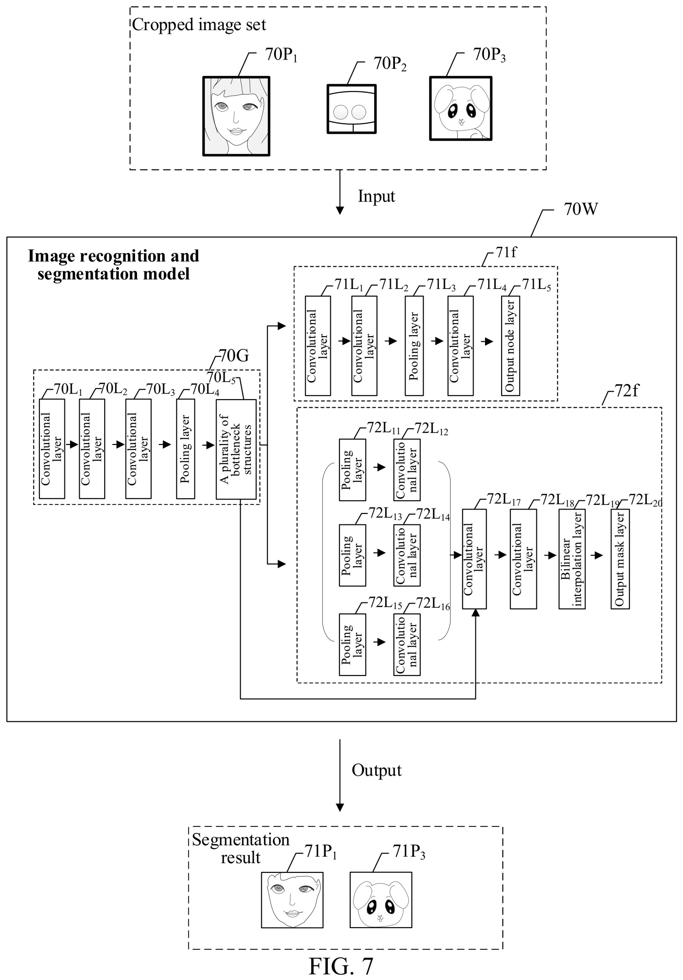

For ease of understanding, FIG. 7 is a schematic diagram of a scenario in which recognition and segmentation are performed based on an image recognition and segmentation model according to embodiments of the disclosure. As shown in FIG. 7, a cropped image set may include N cropped images, N being a positive integer, and a cropped image being obtained by the computer device by cropping a to-be-detected image based on an adjusted box in an adjusted box set. For ease of description, for example, N herein may be 3, and the cropped images may include a cropped image $70P_1$, a cropped image $70P_2$, and a cropped image $70P_3$. The to-be-detected image herein may be the image 200p shown in FIG. 2. The cropped image $70P_1$ is obtained by the computer device by cropping the image 200p based on the adjusted box $22B_1$ shown in FIG. 2, the cropped image $70P_2$ is obtained by the computer device by cropping the image 200p based on the adjusted box $22B_2$ shown in FIG. 2, and the cropped image $70P_3$ is obtained by the computer device by cropping the image 200p based on the adjusted box $22B_3$ shown in FIG. 2.

To learn of more detailed information and distinguish a bounding box that cannot be correctly detected in the foregoing two operations, the image recognition and segmentation model invoked in all embodiments of the disclosure includes a public network layer and a multitasking branch. The public network layer herein may include a plurality of convolutional layers and a plurality of residual bottleneck structures, and all pooling layers in the image recognition and segmentation model may be average pooling layers.

As shown in FIG. 7, an image recognition and segmentation model 70W herein may include a public network layer 70G, an image classification branch 71f, and an image segmentation branch 72f. The public network layer 70G may include a convolutional layer $70L_1$, a convolutional layer $70L_2$, a convolutional layer $70L_3$, a pooling layer $70L_4$, and a plurality of bottleneck structures $70L_5$. For example, 64 $3\times3$ convolution kernels may be used at the convolutional layer $70L_1$, with a step of 2; 64 $3\times3$ convolution kernels may be used at the convolutional layer $70L_2$, with a step of 1; 128 $3\times3$ convolution kernels may be used at the convolutional layer $70L_3$, with a step of 1; and a filter parameter of the pooling layer $70L_4$ may be $3\times3$, with a step of 2. For example, the plurality of bottleneck structures herein may be four bottleneck structures. Table 2 is a schematic table of parameters of a bottleneck structure group according to all embodiments of the disclosure. Details are shown in Table 2.

Table 2

| Parameter | Convolutional layer 1 | | | Convolutional layer 2 | | | Convolutional layer 3 | | |
|---|---|---|---|---|---|---|---|---|---|
| | Convolution kernel | Step | Depth | Convolution kernel | Step | Depth | Convolution kernel | Step | Depth |
| Bottleneck structure 1 | $1\times1$ | 2 | 128 | $3\times3$ | 1 | 128 | $1\times1$ | 1 | 512 |
| Bottleneck structure 2 | $1\times1$ | 1 | 128 | $3\times3$ | 1 | 128 | $1\times1$ | 1 | 512 |
| Bottleneck structure 3 | $1\times1$ | 1 | 128 | $3\times3$ | 1 | 128 | $1\times1$ | 1 | 512 |
| Bottleneck structure 4 | $1\times1$ | 1 | 128 | $3\times3$ | 1 | 128 | $1\times1$ | 1 | 512 |

The image classification branch may include a convolutional layer $71L_1$, a convolutional layer $71L_2$, a pooling layer $71L_3$, a convolutional layer $71L_4$, and an output node layer $71L_5$. For example, 512 $3\times3$ convolution kernels may be used at the convolutional layer $71L_1$ and the convolutional layer $71L_2$, with a step of 2; a filter parameter of the pooling layer $71L_3$ may be $7\times7$, with a step of 7; two $1\times1$ convolution kernels may be used at the convolutional layer $71L_4$, with a step of 1; and The output node layer $71L_5$ may be a two-category output node, is configured to output a portion category or a non-salient category.

The image segmentation branch 72f may include a pooling layer $72L_{11}$, a convolutional layer $72L_{12}$, a pooling layer $72L_{13}$, a convolutional layer $72L_{14}$, a pooling layer $72L_{15}$, a convolutional layer $72L_{16}$, a convolutional layer $72L_{17}$, a convolutional layer $72L_{18}$, a bilinear interpolation layer $72L_{19}$, and an output mask layer $72L_{20}$. For example, a filter parameter of the pooling layer $72L_{11}$ may be $5\times5$, with a step of 5; 512 $1\times1$ convolution kernels may be used at the convolutional layer $72L_{12}$, with a step of 1; a filter parameter of the pooling layer $72L_{13}$ may be $10\times10$, with a step of 10; 512 $1\times1$ convolution kernels may be used at the convolutional layer $72L_{14}$, with a step of 1; a filter parameter of the pooling layer $72L_{15}$ may be $14\times14$, with a step of 14; 512 $1\times1$ convolution kernels may be used at the convolutional layer $72L_{16}$, with a step of 1; 512 $3\times3$ convolution kernels may be used at the convolutional layer $72L_{17}$, with a step of 1; and two $1\times1$ convolution kernels may be used at the convolutional layer $72L_{18}$, with a step of 1. In the image segmentation branch, a multi-size pooling operation is performed on feature maps obtained from the public network layer. Then these feature maps are connected, and re-interpolation is performed on the feature maps by using a bilinear interpolation method to obtain an image with the same size as that of an input image. A segmentation mask image of the image is obtained. Then the segmentation mask image may be determined as a segmented image corresponding to the input image.

For example, the computer device may separately determine the cropped images in the cropped image set shown in FIG. 7 as to-be-processed images. For example, the computer device may input the cropped image $70P_1$ to the image recognition and segmentation model 70W shown in FIG. 7. Recognition is performed on the cropped image $70P_1$ by using the image classification branch 71f to obtain a predicted category confidence (for example, 0.9) corresponding to the cropped image $70P_1$. A non-salient portion of the cropped image $70P_1$ is eliminated by using the image segmentation branch 72f to obtain a segmented image corresponding to the cropped image $70P_1$.

The computer device may input the cropped image 70P2 to the image recognition and segmentation model 70W. Recognition is performed on the cropped image $70P_2$ by using the image classification branch 71f to obtain a predicted category confidence (for example, 0.3) corresponding to the cropped image $70P_2$. A non-salient portion of the cropped image $70P_2$ is eliminated by using the image segmentation branch 72f to obtain a segmented image corresponding to the cropped image $70P_2$.

The computer device may input the cropped image $70P_3$ to the image recognition and segmentation model 70W. Recognition is performed on the cropped image $70P_3$ by using the image classification branch 71f to obtain a predicted category confidence (for example, 0.87) corresponding to the cropped image $70P_3$. A non-salient portion of the cropped

image $70P_3$ is eliminated by using the image segmentation branch 72f to obtain a segmented image corresponding to the cropped image $70P_3$.

Because both the predicted category confidence corresponding to the cropped image $70P_1$ and the predicted category confidence corresponding to the cropped image $70P_3$ are greater than a confidence threshold (for example, 0.8), the computer device may determine that both the cropped image $70P_1$ and the cropped image $70P_3$ belong to a portion category. The computer device may determine both the segmented image (for example, a segmented image $71P_1$ shown in FIG. 7) corresponding to the cropped image $70P_1$ and the segmented image (for example, a segmented image $71P_3$ shown in FIG. 7) corresponding to the cropped image $70P_3$ as a segmentation result associated with a portion.

The image recognition and segmentation model 70W can output both a pixel-level image segmentation result and a macroscopic image detection result. Therefore, in all embodiments of the disclosure, macroscopic image information of a classification task and microscopic pixel information of a segmentation task can be fully utilized, to learn of a feature with more comprehensive expressiveness. Overall effect of an algorithm process can be improved through multitasking, and very high accuracy can be ensured while two types of capabilities are output.

Operation S104: Correct, based on coordinate positions of the M segmented images, adjusted boxes in the third box set that correspond to the M segmented images, to generate M corrected boxes indicating the first portion.

After obtaining the M segmented images in the segmentation result, the computer device determines, from the adjusted box set, the adjusted boxes corresponding to the M segmented images, and then may correct coordinate positions of the determined adjusted boxes based on the coordinate positions of the segmented images, to obtain the M corrected boxes indicating the portion of the to-be-detected image.

As shown in FIG. 2, the computer device may determine, from the adjusted box set, that an adjusted box corresponding to the segmented image $P_1$ is the adjusted box $22B_1$, and then may correct the adjusted box $22B_1$ based on the coordinate position of the segmented image $P_1$ to obtain the corrected box $23B_1$. The computer device may further determine, from the adjusted box set, that an adjusted box corresponding to the segmented image $P_2$ is the adjusted box $22B_3$, and then may correct the adjusted box $22B_3$ based on the coordinate position of the segmented image $P_2$ to obtain the corrected box $23B_3$. This means that, after correcting the adjusted box set based on the two segmented images in the segmentation result, the computer device in all embodiments can accurately obtain two bounding boxes (for example, corrected boxes) indicating the portion of the image 200p, that is, faces of two different service objects exist in the image 200p.

In the embodiments of the disclosure, an end-to-end closed-loop design of image detection and segmentation is completed by using a concatenated model group formed by connecting the image detection model, the deduplication rule based on shape-adaptive NMS, the image offset adjustment model, and the image recognition and segmentation model in series. In this image detection method, through deduplication and offset adjustment (including deduplication and position correction) and a comprehensive consideration of an internal relationship between an image detection task and an image segmentation task, great importance is attached to a localization accuracy indicator of the bounding box in which the portion is located, to obtain the corrected box that can more precisely indicate the portion of the to-be-detected image, so that accuracy of image detection is effectively improved.

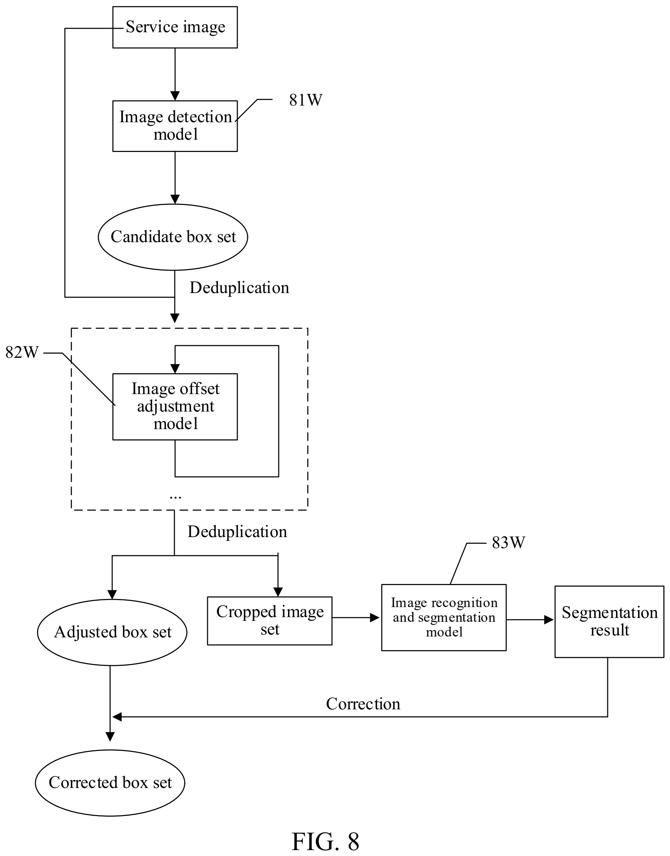

FIG. 8 is a schematic diagram of an image detection framework according to embodiments of the disclosure. As shown in FIG. 8, all embodiments of the disclosure provide a closed-loop architecture of an iterative localization-type image detection and segmentation solution based on deep learning. The architecture may include a quick image detection stage, an iterative localization box offset correction stage, and a multitasking image detection and segmentation stage.

In the quick image detection stage, when obtaining a to-be-detected image, the computer device may input the to-be-detected image to an image detection model 81W shown in FIG. 8, and then may obtain, at a high recall rate from the to-be-detected image by using the image detection model 81W, a large quantity of localization boxes (for example, candidate boxes) in which a suspected portion is located, to provide quick and good pre-filtering for a subsequent image detection process. For example, image detection is performed on a portion of the to-be-detected image to obtain a candidate box set including a plurality of candidate boxes.

Because the candidate box set may include overlapping candidate boxes, in the iterative localization box offset correction stage, the computer device may perform intelligent deduplication on the candidate box set according to a deduplication rule based on shape-adaptive NMS, to retain one or more most effective candidate boxes, and reduce an amount of subsequent calculation. The computer device may input both a deduplicated candidate box set (for example, a to-be-processed box set) and the to-be-detected image to an image offset adjustment model 82W to iteratively perform position offset fine-adjustment (for example, position correction) on H candidate boxes in the to-be-processed box set, until H bounding boxes for example, adjusted boxes) indicating optimal localization of each portion are obtained, H being a positive integer. To improve efficiency of subsequent detection, the computer device may deduplicate the H candidate boxes again to obtain an adjusted box set and a cropped image set corresponding to the adjusted box set. Each cropped image in the cropped image set herein is obtained by cropping the to-be-detected image based on an adjusted box in the adjusted box set.

In the multitasking image detection and segmentation stage, the computer device may perform image classification and image segmentation on a remaining bounding box (for example, an adjusted box in the adjusted box set) again, to output both a bounding box in which a portion of a category set is located, and a pixel-level background-removed segmented image. For example, the computer device may input N cropped images in the cropped image set to an image recognition and segmentation model 83W shown in FIG. 8, to determine, by using an image classification branch and an image segmentation branch in the image recognition and segmentation model 83W, a segmented image belonging to a portion category, so that a segmentation result associated with the portion can be obtained. The segmentation result herein may include M segmented images, M is a positive integer less than or equal to N, and N is a positive integer less than or equal to H.

Finally, the computer device may separately correct adjusted boxes in the adjusted box set that correspond to the M segmented images, to obtain a corrected box set. The corrected box set herein may include M corrected boxes indicating the portion of the to-be-detected image.

An input of a detection system corresponding to the detection framework shown in FIG. 8 may be a to-be-detected image on which detection may be performed, and an output of the system may indicate whether a portion (for example, a human face) exists in a current to-be-detected image. If a portion exists, a bounding box (for example, a corrected box) in which the portion is located and a pixel-level foreground image (for example, a background-removed segmented image) corresponding to each corrected box are output. Due to impact of diversity of portions, a change in an angle of view, an illumination condition, occlusion, and a complex background, the image detection model 81W, the deduplication rule, the image offset adjustment model 82W, and the image recognition and segmentation model 83W in all embodiments are designed through customization based on portions. The framework in all embodiments can be transferred to more image object detection tasks through customization. During image detection based on the framework, quick detection can be implemented on a complex portion of a to-be-detected image, with low implementation/operation costs, a high recognition recall rate/precision, and superb online performance.

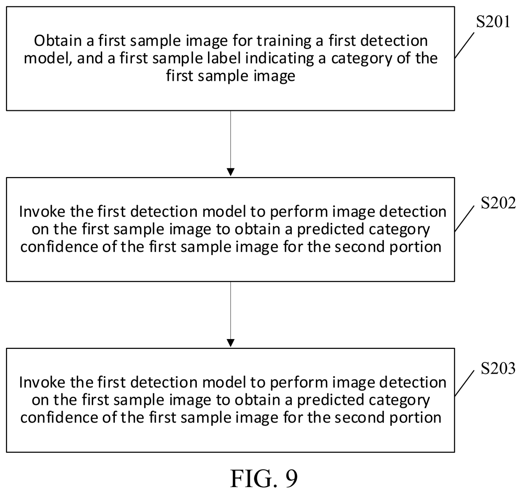

FIG. 9 is a schematic flowchart of a training method for an image detection model according to embodiments of the disclosure. The method may be performed by a computer device with a model training function. The computer device may be a terminal device (for example, any terminal device in the terminal device cluster shown in FIG. 1, for example, the terminal device 100a), or may be a server with a model training function (for example, the server 10F shown in FIG. 1). This is not limited herein. The method may include at least the following operation S201 to operation S203:

Operation S201: Obtain a first sample image for training a first detection model, and a first sample label indicating a category of the first sample image, the first sample image being obtained by preprocessing a second portion of a raw sample image.

For a network structure of the first detection model, refer to the network structure shown in FIG. 4. The first detection model may include two convolutional layers, two pooling layers, two normalization layers, one special network layer (for example, a network layer $4L_7$), and a final output layer (label layer). The first sample image is obtained by preprocessing a portion of a raw sample image. For example, if the portion (also called the second portion) is a human face, the raw sample image herein may be a face image in a face database (for example, Annotated Facial Landmarks in the Wild, referred to as a face dataset). When obtaining the raw sample image, the computer device may generate a face/non-face training set through local segmentation, flipping, Gaussian blurring, or the like.

Operation S202: Invoke the first detection model to perform image detection on the first sample image to obtain a predicted category confidence of the first sample image for the second portion.

Operation S203: Train the first detection model based on the predicted category confidence of the first sample image and the category of the first sample image to obtain an image detection model for performing the image detection on the first portion.

The computer device calculates a loss based on the predicted category confidence of the first sample image and the category (i.e., actual category) of the first sample image to determine a model loss of the first detection model, and then trains the first detection model based on the model loss of the first detection model to obtain a first model training result. Based on the first model training result indicating that the first detection model satisfies a first model convergence condition, the computer device uses the first detection model as a second detection model, and then analyzes a network structure of the second detection model to obtain an analysis result, and generates the image detection model based on the analysis result and the second detection model.

If the network structure of the first detection model designed in all embodiments of the disclosure is a first network structure (a network structure when the network layer $4L_7$ shown in FIG. 4 is a fully connected layer), the computer device may train the first detection model to obtain the first detection model (for example, the second detection model) that satisfies the model convergence condition, and may directly use the second detection model as a final image detection model.

An objective of training the first detection model is to minimize a loss function, for example, minimize a difference between a predicted label and a true label through network training, the difference being referred to as a loss. There are a plurality of types of loss functions. For a classification task, in all embodiments, a loss function obtained by combining a cross-entropy loss function and a regularization term may be used. Refer to the following formulas (6) to (8):

$$J(w) = \frac{1}{N} \sum_{i=1}^{N} L(y_i, p_i) + \lambda R(w) \qquad (6)$$

N herein is a quantity of samples in each iteration, for example, a batch-size. $L(y_i, p_i)$ is a loss value of an $i^{th}$ sample image in the first sample image. $\lambda$ controls a weight of a regularization term. R is the regularization term. w is a weight value.

$$L(y_i, p_i) = -\sum_{j=1}^{C} y_{ij} \, log(p_{ij}) \qquad (7)$$

C is a total quantity of categories (for example, 2, for example, a portion and a non-salient portion). $y_{ij}$ is a true category confidence, determined from the first sample label, of the $i^{th}$ sample image in the first sample image belonging to a category j (for example, the portion category). $p_{ij}$ is a predicted category confidence, determined by the first detection model, of the $i^{th}$ sample image belonging to the category j (for example, the portion category).

$$R(w) = \sum_{k=1}^{K} w_k^{\,2} \qquad (8)$$

K is a quantity of weights, and $w_k$ is a $k^{th}$ weight among the k weights.
The cross-entropy loss function measures a difference between different distributions, and has good effect for measuring whether two types of tasks in all embodiments belong to a portion. A regularization loss function represents a sum of squares of weights, and can effectively suppress a weight range, to improve model generality.
After the first sample image is input to the first detection model whose network structure is the first network structure, the computer device may determine the model loss of the first detection model based on the formulas (6) to (8), and then may train the first detection model based on the model loss and a model convergence condition (for example, the first model convergence condition) corresponding to the first detection model, to obtain the first model training result. The first model convergence condition herein is that a current model loss reaches or exceeds a specified threshold or a quantity of training steps reaches or exceeds a specified threshold.
If the first model training result indicates that the trained first detection model satisfies the first model convergence condition, the computer device may use the first detection model as the second detection model, and then may directly use the second detection model as the image detection model for performing image detection on the portion of the to-be-detected image.
In some embodiments, if the network structure of the first detection model designed in all embodiments is the first network structure, the finally obtained second detection model includes a fully connected layer. Because an input sample image may be traversed by using a sliding window method during image detection, the entire process takes a large amount of time. For a formula about a quantity of times of classification, refer to the following formula (9):

$$C = \left(\frac{L-S}{S} + 1\right) \times \left(\frac{W-S}{S} + 1\right) \qquad (9)$$

L represents a length of an input image, W represents a width of the input image, and S represents a sliding step of a sliding window.
Assuming that a size of an input sample image is 800×600 and a sliding step is 32, it can be determined, based on the formula (9), that a quantity of times of classification for the input sample image is 450. To detect portions of different sizes, the input sample image is further scaled to different sizes and then input to the network again. This further increases a quantity of times of classification required. Actually, adjacent windows partially overlap during image detection based on a sliding window, and calculation is repeatedly performed on this part of overlapping images for a plurality of times during sliding calculation, leading to an unnecessary waste of calculation resources. To overcome this problem, in all embodiments of the disclosure, after the second detection model including the fully connected layer is obtained through training, the second detection model including the fully connected layer may be converted into a fully convolutional network, and a second detection model obtained through conversion is determined as a final image detection model.
For example, when the analysis result indicates that the second detection model includes the fully connected layer, the computer device may replace the fully connected layer in the second detection model with a first convolutional layer including a sliding step, and then may assign a value to the first convolutional layer based on a network parameter of the fully connected layer to obtain a second convolutional layer, and determine the second detection model including the second convolutional layer as the image detection model for performing image detection on the portion of the to-be-detected image. Before being converted into the fully convolutional network, the model supports inputting of a picture with a fixed image size (for example, 48×48×3). After being converted into the fully convolutional network, the model supports inputting of a picture with any image size.

In some embodiments, if the network structure of the first detection model designed in all embodiments of the disclosure is the second network structure (a network structure when the network layer $4L_7$ shown in FIG. 4 is a convolutional layer), the computer device may determine that an analysis result of the first detection model satisfying the first model convergence condition (for example, the second detection model) indicates that the second detection model is a fully convolutional network. The computer device may perform image detection on an image of any size. The computer device may also directly determine the second detection model that is a fully convolutional network as a final image detection model.

The image detection model (for example, the image detection model 81W shown in FIG. 8) in all embodiments of the disclosure may include three cases. In one case, the image detection model is obtained by directly training the first detection model belonging to the first network structure. In another case, the image detection model is obtained by training the first detection model belonging to the first network structure and then converting a trained first detection model into a fully convolutional network. In still another case, the image detection model is obtained by directly training the first detection model belonging to the second network structure. A training process of the image detection model is not limited herein. The trained image detection model in all embodiments is configured to perform operation S101 in the embodiments corresponding to FIG. 3. When a to-be-detected image is obtained, image detection is performed on a portion of the to-be-detected image by using the image detection model, to obtain a candidate box set.

In all embodiments of the disclosure, a solution of an image detection model based on a fully convolutional network is provided. In this solution, sliding window detection may be performed on an image of any size, to detect, to the maximum extent, a portion from the image with very high coverage. This design adapts to task characteristics and can detect a portion of any size in an image of any size within very short time, to provide good pre-filtering for a subsequent process, improve overall operation efficiency of the system, and avoid a large quantity of ineffective calculations.

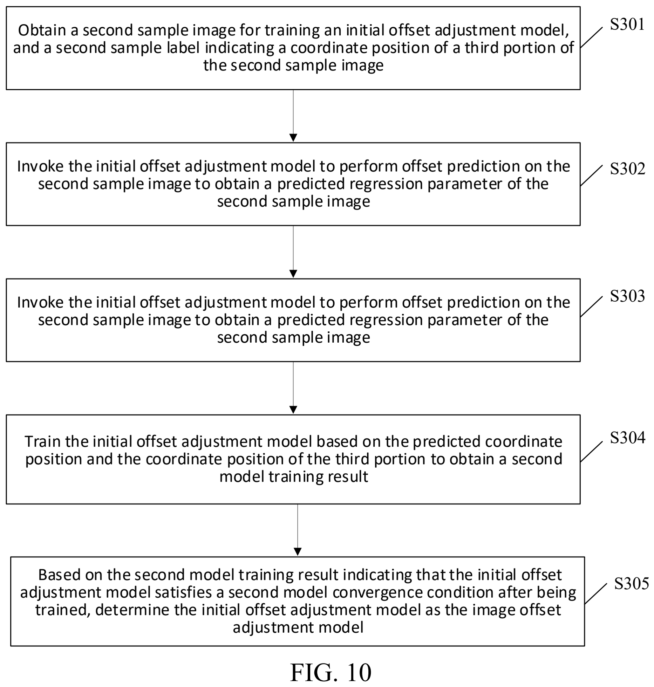

FIG. 10 is a schematic flowchart of a training method for an image offset adjustment model according to embodiments of the disclosure. The method may be performed by a computer device with a model training function. The computer device may be a terminal device (for example, any terminal device in the terminal device cluster shown in FIG. 1, for example, the terminal device 100a), or may be a server with a model training function (for example, the server 10F shown in FIG. 1). This is not limited herein. The method may include at least the following operation S301 to operation S305:

Operation S301: Obtain a second sample image for training an initial offset adjustment model, and a second sample label indicating a coordinate position of a third portion of the second sample image.

To obtain a sufficient offset mode classification capability and minimize calculation complexity, in all embodiments, a network structure (for example, an A-Net) of the initial offset adjustment model may be constructed based on a network structure (for example, a D-Net) of an image detection model. For the initial offset adjustment model, refer to the network structure in FIG. 6. The initial offset adjustment model may include four convolutional layers, three pooling layers, one fully connected layer, and a final output layer (label layer).

If the portion of the second sample image (i.e., the third portion) belongs to a human face, because there are many public labeled face datasets for face detection on the Internet, an application may be directly submitted to an author to download a dataset. Training data further may be extracted from a labeled face dataset. A correct position of a face should be obtained from the labeled face dataset based on a face label, and a position offset (for example, an actual offset) is performed on the face to form an offset face and a corresponding offset parameter. In all embodiments, face images obtained through offsetting may be distinguished as a training set, a verification set, and a test set, and the training set may be used as the second sample image for performing a next training operation. The second sample label of the second sample image indicates an actual coordinate position of the second sample image, a coordinate position determined based on the offset parameter and a coordinate position of a face that exists before the offsetting.

Operation S302: Invoke the initial offset adjustment model to perform offset prediction on the second sample image to obtain a predicted regression parameter of the second sample image.

Operation S303: Perform position correction on a coordinate position of the second sample image based on the predicted regression parameter to obtain a predicted coordinate position of the second sample image.

The computer device may separately adjust corresponding coordinates (for example, coordinates of a vertex, a width, or a height) of the coordinate position of the second sample image based on the formula (5) and each predicted offset in the predicted regression parameter of the second sample image, to determine the predicted coordinate position of the second sample image.

Operation S304: Train the initial offset adjustment model based on the predicted coordinate position and the coordinate position of the third portion to obtain a second model training result.

The computer device may determine a model loss of the initial offset adjustment model based on the predicted coordinate position and the actual coordinate position indicated by the second sample label, and then may train the initial offset adjustment model based on the model loss of the initial offset adjustment model to obtain the second model training result.

For a region in which the portion of the second sample image is located, the initial offset adjustment model may predict an offset between the region and a nearest bounding box (for example, a predicted offset corresponding to an upper-left corner of the bounding box, a predicted offset corresponding to a height, and a predicted offset corresponding to a width). A learning objective is formulated as a regression issue. The model loss of the initial offset adjustment model may be determined based on a sample loss of each sample in the second sample image. A sample loss of a sample may be determined by using a Euclidean loss. Refer to the following formula (10):

$$L_i^{box} = \left\| y'^{box}_i - y_i^{box} \right\|_2^2 \qquad (10)$$

i represents an ith sample in the second sample image. $y'^{box}_i$ represents a predicted coordinate position of the ith sample that is determined based on the initial offset adjustment model. $y_i^{box}$ represents a predicted coordinate position of the ith sample that is determined based on the second sample label. The coordinate position herein includes four coordinates, which may include coordinates of an upper-left corner, a height, and a width. Therefore, $y'^{box}_i \in R^4$.

Operation S305: Based on the second model training result indicating that the initial offset adjustment model satisfies a second model convergence condition after being trained, determine the initial offset adjustment model as the image offset adjustment model.

The second model convergence condition herein is that a current model loss reaches or exceeds a specified threshold or a quantity of training steps reaches or exceeds a specified threshold. A network structure (for example, an A-Net) of the image offset adjustment model may be a position correction network for a portion region. The network is configured to perform feature extraction on a to-be-detected image, and then correct a bounding box in which a portion is located by using a regression parameter of the bounding box.

In all embodiments of the disclosure, offset prediction is performed, by using a trained offset prediction depth model (for example, the image offset adjustment model 82W shown in FIG. 8), on the deduplicated candidate box set obtained in the foregoing process (for example, operation S102 in the embodiments corresponding to FIG. 3), and cyclic iterative position correction is performed to achieve more accurate localization. An adjusted box obtained in this solution has very high localization accuracy. A small portion can be accurately localized, and adjacent or partially overlapping portions can be effectively distinguished.

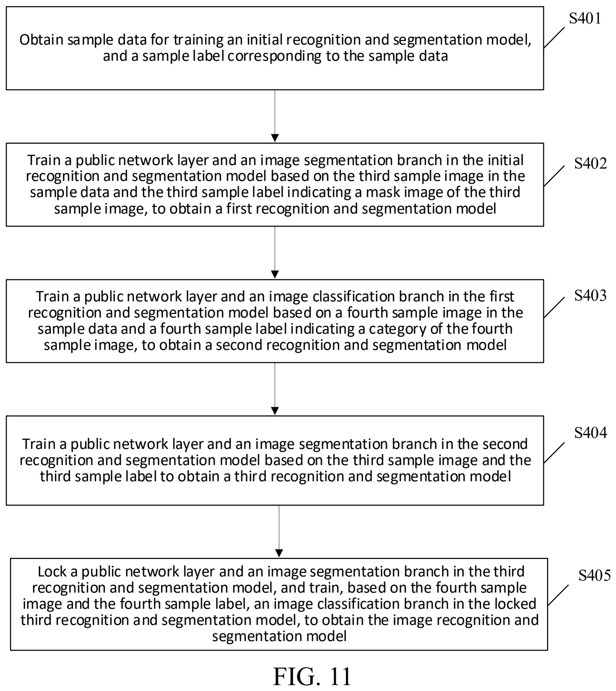

FIG. 11 is a schematic flowchart of a training method for an image recognition and segmentation model according to embodiments of the disclosure. The method may be performed by a computer device with a model training function. The computer device may be a terminal device (for example, any terminal device in the terminal device cluster shown in FIG. 1, for example, the terminal device 100a), or may be a server with a model training function (for example, the server 10F shown in FIG. 1). This is not limited herein. The method may include at least the following operation S401 to operation S405:

Operation S401: Obtain sample data for training an initial recognition and segmentation model, and a sample label corresponding to the sample data.

To better describe image information of a portion macroscopically and microscopically, a residual module and a pyramid pooling module may be introduced into the initial recognition and segmentation model in all embodiments of the disclosure, to construct a network structure (for example, an S-Net) of the initial recognition and segmentation model. For details, refer to the network structure shown in FIG. 7. The initial recognition and segmentation model may include a public network layer 70G, an image classification branch 71f, and an image segmentation branch 72f.

Tasks of the network include an image classification task and an image segmentation task. Training sets for the two tasks may be incompatible. A reason is as follows. For the image segmentation task, if a sample image of a non-salient portion is introduced, a segmentation mask of the sample image of the non-salient portion is set as a full-image non-salient portion. A loss function in a training process increases by a plurality of times. This largely affects correct segmentation of a portion. In view of the foregoing factors, in all embodiments, staged training is performed for the two tasks. The sample data herein may include a third sample image for training an image segmentation branch and a fourth sample image for training an image classification branch, and the sample label herein may include a third sample label (indicating an actual mask image) corresponding to the third sample image and a fourth sample label (indicating an actual category) corresponding to the fourth sample image.

Because the network includes a label compatibility issue between the two tasks, multi-stage training may be performed in all embodiments of the disclosure. Loss functions are respectively defined for the two tasks in all embodiments. For a loss function of the image segmentation task, refer to the following formula (11):

$$L^{seg} = -\frac{1}{N} \sum_{i=1}^{N} \sum_{h}^{H} \sum_{w}^{W} \sum_{j}^{T} y_{ijwh} \, log\left(\frac{e^{f_{ijwh}}}{\sum_{k=1}^{K} e^{f_{ikwh}}}\right) \qquad (11)$$

N may represent a quantity of training samples in an iteration of the third sample image. H is a height of a mask image. W is a width of the mask image. T is a quantity (for example, 2) of categories. $f_{ijwh}$ may represent a predicted category confidence (for example, a second confidence) of an $i^{th}$ sample for a $j^{th}$ category at a pixel position (w, h). $y_{ijwh}$ may represent an actual category confidence (for example, a first confidence) of the $i^{th}$ sample for the $j^{th}$ category at the pixel position (w, h).

For a loss function of the image classification task, refer to the following formula (12):

$$L^{classfy} = -\frac{1}{N}\sum_{i=1}^{N}\sum_{j}^{T} y_{ij}\log\left(\frac{e^{f_{ij}}}{\sum_{k=1}^{K} e^{f_{ik}}}\right) \qquad (12)$$

N may represent a quantity of training samples in an iteration of the fourth sample image. T is a quantity (for example, 2) of categories. $f_{ij}$ may represent a predicted category confidence (for example, a sample prediction confidence) of an $i^{th}$ sample for a $j^{th}$ category. $y_{ij}$ may represent an actual category confidence of the $i^{th}$ sample for the $j^{th}$ category.

Operation S402: Train a public network layer and an image segmentation branch in the initial recognition and segmentation model based on the third sample image in the sample data and the third sample label indicating a mask image of the third sample image, to obtain a first recognition and segmentation model.

Operation S403: Train a public network layer and an image classification branch in the first recognition and segmentation model based on a fourth sample image in the sample data and a fourth sample label indicating a category of the fourth sample image, to obtain a second recognition and segmentation model.

Operation S404: Train a public network layer and an image segmentation branch in the second recognition and segmentation model based on the third sample image and the third sample label to obtain a third recognition and segmentation model.

After performing operation S403, the computer device may repeatedly train the public network layer and the image segmentation branch in the second recognition and segmentation model based on the third sample image and the third sample label at a lower learning rate, until a loss is stable.

For example, the computer device may invoke the image segmentation branch in the second recognition and segmentation model to eliminate a non-salient portion of the third sample image to obtain a predicted mask image corresponding to the third sample image, and then may traverse pixels of the third sample image, and determine a pixel found through traversal as a to-be-processed pixel. The computer device may determine a confidence of the to-be-processed pixel in the actual mask image indicated by the third sample label as a first confidence, and determine a confidence of the to-be-processed pixel in the predicted mask image as a second confidence, and then may perform loss calculation on the first confidence and the second confidence based on the formula (11) to determine a model loss of the second recognition and segmentation model. Then the computer device may train the public network layer and the image segmentation branch in the second recognition and segmentation model based on the model loss of the second recognition and segmentation model to obtain a third model training result, and if the third model training result indicates that a trained second recognition and segmentation model satisfies a first branch convergence condition in a third model convergence condition, determine the second recognition and segmentation model that satisfies the first branch convergence condition as the third recognition and segmentation model. The first branch convergence condition herein may be that the model loss is stable.

Operation S405: Lock a public network layer and an image segmentation branch in the third recognition and segmentation model, and train, based on the fourth sample image and the fourth sample label, an image classification branch in the locked third recognition and segmentation model, to obtain the image recognition and segmentation model.

The computer device may lock the public network layer and the image segmentation branch in the third recognition and segmentation model, and then may determine the locked third recognition and segmentation model as a fourth recognition and segmentation model. The computer device may invoke the fourth recognition and segmentation model to perform recognition on the fourth sample image by using an image classification branch in the fourth recognition and segmentation model, to determine a sample prediction confidence corresponding to the fourth sample image, and then may calculate, based on the formula (12), a loss based on the actual category indicated by the fourth sample label and the sample prediction confidence, to determine a model loss of the fourth recognition and segmentation model. The computer device may train the image classification branch in the fourth recognition and segmentation model based on the model loss of the fourth recognition and segmentation model to obtain a fourth model training result, and based on the fourth model training result indicating that the fourth recognition and segmentation model satisfies a second branch convergence condition in the third model convergence condition, determine the fourth recognition and segmentation model as the image recognition and segmentation model. The second branch convergence condition herein may also be that the model loss is stable. The trained image recognition and segmentation model in all embodiments is configured to perform operation S103 in the embodiments corresponding to FIG. 3. Recognition and segmentation are performed on each of the N cropped images by using the image recognition and segmentation model, to obtain a segmentation result associated with the portion.

In all embodiments of the disclosure, in the staged training method, a public network layer in the finally obtained image recognition and segmentation model (for example, the image recognition and segmentation model 83W shown in FIG. 8) can effectively express features of an input image for both of the two tasks, and respective tasks can be well performed after the features are transmitted to respective branches. In all embodiments, the two tasks are combined into one network, and are jointly trained in a plurality of stages during training, so that the network can learn of portion features incorporating both of the two tasks. An internal relationship between the two tasks can also enable the network to learn of a feature with better expressiveness during training, to achieve mutual gains. In terms of a structure of the image recognition and segmentation model, in all embodiments, a good balance is achieved between segmentation effect and an operation speed through structural optimization. Overall complexity of the network is not high, and operation efficiency of a single network may reach 25 frames per second. During actual application of the model, a background or another non-primary portion of a cropped image may be cleared based on image information of the cropped image by using the image segmentation branch in the image recognition and segmentation model, so that a portion of a segmented image is clearer and purer, and pixel-level image information (for example, human face information) can be output. Image detection may be performed again by using the image classification branch in the image recognition and segmentation model to predict a category of an adjusted box corresponding to the cropped image, to improve accuracy of image detection.

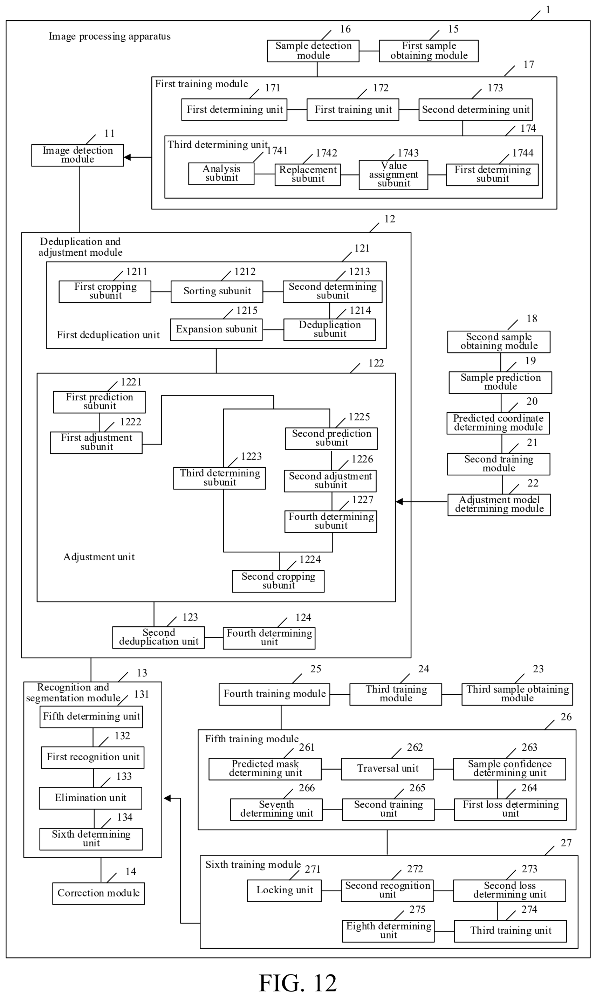

FIG. 12 is a schematic structural diagram of an image processing apparatus according to embodiments of the disclosure. As shown in FIG. 12, the image processing apparatus 1 may include an image detection module 11, a deduplication and adjustment module 12, a recognition and segmentation module 13, a correction module 14, a first sample obtaining module 15, a sample detection module 16, a first training module 17, a second sample obtaining module 18, a sample prediction module 19, a predicted coordinate determining module 20, a second training module 21, an adjustment model determining module 22, a third sample obtaining module 23, a third training module 24, a fourth training module 25, a fifth training module 26, and a sixth training module 27.

The image detection module 11 is configured to obtain an image (a to-be-detected image), and perform image detection on a first portion of the image to obtain a first box set (a candidate box set) including at least one first candidate box each marking one region associated with the first portion.

The deduplication and adjustment module 12 is configured to deduplicate the at least one first candidate box based on the image to obtain a second box set (a to-be-processed box set) including at least one second candidate box, perform position correction on each of the at least one second candidate box to obtain at least one adjusted box, and generate, based on the at least one adjusted box, a third box set (an adjusted box set) including the at least one adjusted box and a cropped image set corresponding to the third box set, the cropped image set including at least one cropped image that is obtained by cropping the image based on the at least one adjusted box, a total quantity of the at least one cropped image is N, and N being a positive integer.

The deduplication and adjustment module 12 includes a first deduplication unit 121, an adjustment unit 122, a second deduplication unit 123, and a fourth determining unit 124.

The first deduplication unit 121 is configured to deduplicate the at least one first candidate box in the candidate box set according to a deduplication rule based on shape-adaptive NMS to obtain the to-be-processed box set including the at least one second candidate box, the at least one second candidate box including a candidate box $X_i$, i being a positive integer less than or equal to H, and H being configured for indicating a total quantity of the at least one second candidate boxes in the to-be-processed box set.

The candidate box set is obtained by invoking an image detection model to perform image detection on the first portion of the to-be-detected image. The candidate box set includes K candidate boxes, K being a positive integer. The image detection model is further configured to determine a predicted category confidence corresponding to each of the K candidate boxes.

The first deduplication unit 121 includes a first cropping subunit 1211, a sorting subunit 1212, a second determining subunit 1213, a deduplication subunit 1214, and an expansion subunit 1215.

The first cropping subunit 1211 is configured to crop the K candidate boxes based on an image cropping rate determined based on the deduplication rule to obtain K cropped boxes.

The sorting subunit 1212 is configured to sort the K cropped boxes based on K predicted category confidences to obtain a sorting result.

The second determining subunit 1213 is configured to determine a first cropped box with a highest predicted category confidence in the sorting result, and determine (K-1) cropped boxes other than the first cropped box in the sorting result as a fourth set (a to-be-filtered set).

The deduplication subunit 1214 is configured to deduplicate the K cropped boxes based on an overlapping degree between the first cropped box and each cropped box in the to-be-filtered set to obtain a fifth set (a retained box set).

The deduplication subunit 1214 is further configured to:

retain the first cropped box, and determine the overlapping degree between the first cropped box and each cropped box in the to-be-filtered set;

based on the to-be-filtered set including an overlapping cropped box with an overlapping degree greater than an overlapping degree threshold, filter the to-be-filtered set to remove the overlapping cropped box;

determine a second cropped box with a highest predicted category confidence in the filtered to-be-filtered set, and determining a sixth set (a new to-be-filtered set) that includes one or more cropped boxes other than the second cropped box in the filtered to-be-filtered set; and

retain the second cropped box, and continue to deduplicate the one or more cropped boxes in the new to-be-filtered set based on an overlapping degree between the second cropped box and each cropped box in the new to-be-filtered set until the new to-be-filtered set is empty, and determine the fifth box set including the retained cropped boxes, the retained box set including the first cropped box and the second cropped box.

The expansion subunit 1215 is configured to perform image expansion on each cropped box in the retained box set based on the image cropping rate to obtain the to-be-processed box set.

For all embodiments of the first cropping subunit 1211, the sorting subunit 1212, the second determining subunit 1213, the deduplication subunit 1214, and the expansion subunit 1215, refer to the descriptions of deduplicating the candidate box set in the embodiments corresponding to FIG. 5.

The adjustment unit 122 is configured to invoke an image offset adjustment model to perform position correction on the candidate box $X_i$ by using the to-be-detected image to obtain an adjusted box $Y_i$ and a cropped image corresponding to the adjusted box $Y_i$.

The adjustment unit 122 includes a first prediction subunit 1221, a first adjustment subunit 1222, a third determining subunit 1223, a second cropping subunit 1224, a second prediction subunit 1225, a second adjustment subunit 1226, and a fourth determining subunit 1227.

The first prediction subunit 1221 is configured to invoke the image offset adjustment model to perform offset prediction on the candidate box $X_i$ by using the to-be-detected image to obtain a first regression parameter.

The first adjustment subunit 1222 is configured to perform position correction on the candidate box $X_i$ based on the first regression parameter to obtain a first adjusted box corresponding to the candidate box $X_i$.

The third determining subunit 1223 is configured to: based on the first regression parameter belonging to a regression parameter threshold range, determine the first adjusted box corresponding to the candidate box $X_i$ as the adjusted box $Y_i$ corresponding to the candidate box $X_i$.

The second cropping subunit 1224 is configured to crop the to-be-detected image based on a coordinate position of the adjusted box $Y_i$ to obtain the cropped image corresponding to the adjusted box $Y_i$.

The second prediction subunit 1225 is configured to: based on the first regression parameter not belonging to the regression parameter threshold range, invoke the image offset adjustment model to perform, by using the to-be-detected image, offset prediction on the first adjusted box corresponding to the candidate box $X_i$ to obtain a second regression parameter.

The second adjustment subunit 1226 is configured to perform, based on the second regression parameter, position correction on the first adjusted box corresponding to the candidate box $X_i$ to obtain a second adjusted box corresponding to the candidate box $X_i$.

The fourth determining subunit 1227 is configured to: based on the second regression parameter belonging to the regression parameter threshold range, determine the second adjusted box corresponding to the candidate box $X_i$ as the adjusted box $Y_i$ corresponding to the candidate box $X_i$.

For all embodiments of the first prediction subunit 1221, the first adjustment subunit 1222, the third determining subunit 1223, the second cropping subunit 1224, the second prediction subunit 1225, the second adjustment subunit 1226, and the fourth determining subunit 1227, refer to the descriptions of performing offset adjustment on the candidate box in the embodiments corresponding to FIG. 3.

The second deduplication unit 123 is configured to: after H adjusted boxes are obtained, deduplicate the H adjusted boxes according to the deduplication rule.

The fourth determining unit 124 is configured to determine the adjusted box set based on one or more adjusted boxes obtained through deduplicating the H adjusted boxes, and determine the cropped image set based on one or more cropped images corresponding to the one or more adjusted boxes.

For all embodiments of the first deduplication unit 121, the adjustment unit 122, the second deduplication unit 123, and the fourth determining unit 124, refer to the descriptions of operation S102 in the embodiments corresponding to FIG. 3.

The recognition and segmentation module 13 is configured to perform recognition and segmentation on each of the N cropped images to obtain a segmentation result associated with the first portion, the segmentation result including M segmented images, and M being a positive integer less than or equal to N.

The recognition and segmentation module 13 includes a fifth determining unit 131, a first recognition unit 132, an elimination unit 133, and a sixth determining unit 134.

The fifth determining unit 131 is configured to determine a cropped image (a to-be-processed image) from the N cropped images.

The first recognition unit 132 is configured to invoke an image recognition and segmentation model to perform recognition on the to-be-processed image by using an image classification branch in the image recognition and segmentation model to obtain a predicted category confidence of the to-be-processed image.

The elimination unit 133 is configured to eliminate a non-salient portion of the to-be-processed image by using an image segmentation branch in the image recognition and segmentation model to obtain a segmented image corresponding to the to-be-processed image.

The sixth determining unit 134 is configured to: based on the predicted category confidence corresponding to the to-be-processed image being greater than a confidence threshold, determine the segmented image corresponding to the to-be-processed image as the segmented image associated with the first portion.

For all embodiments of the fifth determining unit 131, the first recognition unit 132, the elimination unit 133, and the sixth determining unit 134, refer to the descriptions of operation S103 in the embodiments corresponding to FIG. 3.

The correction module 14 is configured to correct, based on coordinate positions of the M segmented images, adjusted boxes in the adjusted box set that correspond to the M segmented images, to generate M corrected boxes indicating the first portion of the to-be-detected image.

The first sample obtaining module 15 is configured to obtain a first sample image for training a first detection model, and a first sample label indicating a category (an actual category) of the first sample image, the first sample image being obtained by preprocessing a second portion of a raw sample image.

The sample detection module 16 is configured to invoke the first detection model to perform image detection on the first sample image to obtain a predicted category confidence of the first sample image for the second portion.

The first training module 17 is configured to train the first detection model based on the predicted category confidence of the first sample image and the actual category of the first sample image to obtain an image detection model for performing the image detection on the first portion of the to-be-detected image.

The first training module 17 includes a first determining unit 171, a first training unit 172, a second determining unit 173, and a third determining unit 174.

The first determining unit 171 is configured to calculate a loss based on the predicted category confidence of the first sample image and the actual category of the first sample image to determine a model loss of the first detection model.

The first training unit 172 is configured to train the first detection model based on the model loss of the first detection model to obtain a first model training result.

The second determining unit 173 is configured to: based on the first model training result indicating that the first detection model satisfies a first model convergence condition, use the first detection model as a second detection model.

The third determining unit 174 is configured to analyze a network structure of the second detection model to obtain an analysis result, and generate the image detection model based on the analysis result and the second detection model.

The third determining unit 174 includes an analysis subunit 1741, a replacement subunit 1742, a value assignment subunit 1743, and a first determining subunit 1744.

The analysis subunit 1741 is configured to analyze a network structure of the second detection model to obtain an analysis result.

The replacement subunit 1742 is configured to: based on the network structure of the second detection model including a fully connected layer, replace the fully connected layer with a first convolutional layer including a sliding step.

The value assignment subunit 1743 is configured to assign a value to the first convolutional layer based on a network parameter of the fully connected layer to obtain a second convolutional layer.

The first determining subunit 1744 is configured to determine the second detection model including the second convolutional layer as the image detection model.

For all embodiments of the analysis subunit 1741, the replacement subunit 1742, the value assignment subunit 1743, and the first determining subunit 1744, refer to the descriptions of performing network conversion on the second detection model in the embodiments corresponding to FIG. 9.

For all embodiments of the first determining unit 171, the first training unit 172, the second determining unit 173, and the third determining unit 174, refer to the descriptions of operation S203 in the embodiments corresponding to FIG. 9.

The second sample obtaining module 18 is configured to obtain a second sample image for training an initial offset adjustment model, and a second sample label indicating a coordinate position (an actual coordinate position) of a third portion of the second sample image.

The sample prediction module 19 is configured to invoke the initial offset adjustment model to perform offset prediction on the second sample image to obtain a predicted regression parameter of the second sample image.

The predicted coordinate determining module 20 is configured to perform position correction on a coordinate position of the second sample image based on the predicted regression parameter to obtain a predicted coordinate position of the second sample image.

The second training module 21 is configured to train the initial offset adjustment model based on the predicted coordinate position and the actual coordinate position to obtain a second model training result.

The adjustment model determining module 22 is configured to: based on the second model training result indicating that the trained initial offset adjustment model satisfies a second model convergence condition, determine the initial offset adjustment model as the image offset adjustment model.

The third sample obtaining module 23 is configured to obtain sample data for training an initial recognition and segmentation model, and a sample label corresponding to the sample data.

The third training module 24 is configured to train a public network layer and an image segmentation branch in the initial recognition and segmentation model based on a third sample image in the sample data and a third sample label indicating a mask image (an actual mask image) of the third sample image, to obtain a first recognition and segmentation model.

The fourth training module 25 is configured to train a public network layer and an image classification branch in the first recognition and segmentation model based on a fourth sample image in the sample data and a fourth sample label indicating an actual category of the fourth sample image, to obtain a second recognition and segmentation model.

The fifth training module 26 is configured to train a public network layer and an image segmentation branch in the second recognition and segmentation model based on the third sample image and the third sample label to obtain a third recognition and segmentation model.

The fifth training module 26 includes a predicted mask determining unit 261, a traversal unit 262, a sample confidence determining unit 263, a first loss determining unit 264, a second training unit 265, and a seventh determining unit 266.

The predicted mask determining unit 261 is configured to invoke the second recognition and segmentation model to eliminate a non-salient portion of the third sample image to obtain a predicted mask image corresponding to the third sample image.

The traversal unit 262 is configured to traverse pixels of the third sample image, and determine a pixel found through traversal as a to-be-processed pixel.

The sample confidence determining unit 263 is configured to determine a confidence of the to-be-processed pixel in the actual mask image indicated by the third sample label as a first confidence, and determine a confidence of the to-be-processed pixel in the predicted mask image as a second confidence.

The first loss determining unit 264 is configured to calculate a loss based on the first confidence and the second confidence to determine a model loss of the second recognition and segmentation model.

The second training unit 265 is configured to train the public network layer and the image segmentation branch in the second recognition and segmentation model based on the model loss of the second recognition and segmentation model to obtain a third model training result.

The seventh determining unit 266 is configured to: based on the third model training result indicating that the second recognition and segmentation model satisfies a first branch convergence condition in a third model convergence condition, determine the second recognition and segmentation model as the third recognition and segmentation model.

For all embodiments of the predicted mask determining unit 261, the traversal unit 262, the sample confidence determining unit 263, the first loss determining unit 264, the second training unit 265, and the seventh determining unit 266, refer to the descriptions of operation S404 in the embodiments corresponding to FIG. 10.

The sixth training module 27 is configured to lock a public network layer and an image segmentation branch in the third recognition and segmentation model, and train, based on the fourth sample image and the fourth sample label, an image classification branch in the locked third recognition and segmentation model, to obtain the image recognition and segmentation model.

The sixth training module 27 includes a locking unit 271, a second recognition unit 272, a second loss determining unit 273, a third training unit 274, and an eighth determining unit 275.

The locking unit 271 is configured to lock the public network layer and the image segmentation branch in the third recognition and segmentation model, and determine the locked third recognition and segmentation model as a fourth recognition and segmentation model.

The second recognition unit 272 is configured to invoke the fourth recognition and segmentation model to perform recognition on the fourth sample image to determine a sample prediction confidence corresponding to the fourth sample image.

The second loss determining unit 273 is configured to calculate a loss based on the actual category indicated by the fourth sample label and the sample prediction confidence to determine a model loss of the fourth recognition and segmentation model.

The third training unit 274 is configured to train an image classification branch in the fourth recognition and segmentation model based on the model loss of the fourth recognition and segmentation model to obtain a fourth model training result.

The eighth determining unit 275 is configured to: based on the fourth model training result indicating that the fourth recognition and segmentation model satisfies a second branch convergence condition in the third model convergence condition, determine the fourth recognition and segmentation model as the image recognition and segmentation model.

For all embodiments of the locking unit 271, the second recognition unit 272, the second loss determining unit 273, the third training unit 274, and the eighth determining unit 275, refer to the descriptions of operation S405 in the embodiments corresponding to FIG. 10.

For all embodiments of the image detection module 11, the deduplication and adjustment module 12, the recognition and segmentation module 13, the correction module 14, the first sample obtaining module 15, the sample detection module 16, the first training module 17, the second sample obtaining module 18, the sample prediction module 19, the predicted coordinate determining module 20, the second training module 21, the adjustment model determining module 22, the third sample obtaining module 23, the third training module 24, the fourth training module 25, the fifth training module 26, and the sixth training module 27, refer to the descriptions of the image processing method in the embodiments corresponding to FIG. 3, FIG. 9, FIG. 10, and FIG. 11. Beneficial effects of the same method are not described herein again.

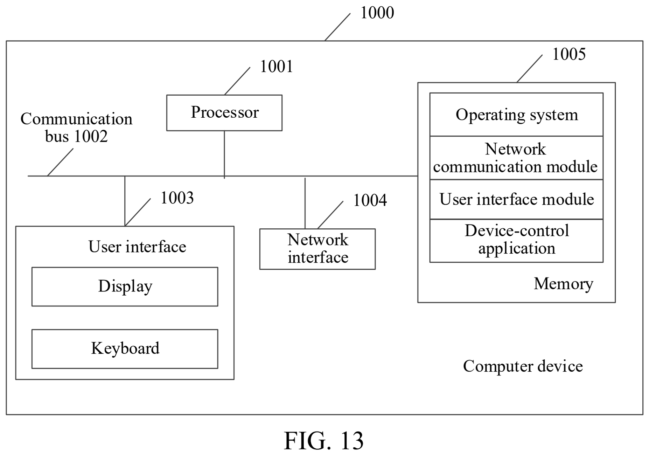

FIG. 13 is a schematic diagram of a computer device according to embodiments of the disclosure. As shown in FIG. 13, the computer device 1000 may include at least one processor 1001, for example, a CPU, at least one network interface 1004, a memory 1005, and at least one communication bus 1002. The communication bus 1002 is configured to implement connection and communication between these components. In some embodiments, the network interface 1004 may include a standard wired interface and wireless interface (for example, a Wi-Fi interface). The memory 1005 may be a high-speed RAM memory, or may be a non-volatile memory, for example, at least one magnetic disk memory. In some embodiments, the memory 1005 may be at least one storage apparatus located away from the processor 1001. As shown in FIG. 13, the memory 1005 used as a computer storage medium may include an operating system, a network communication module, a user interface module, and a device-control application. In some embodiments, the computer device may further include a user interface 1003 shown in FIG. 13. For example, if the computer device is a terminal device with a model training function shown in FIG. 1 (for example, the terminal device 100a), the computer device may further include the user interface 1003. The user interface 1003 may include a display, a keyboard, and the like.

In the computer device 1000 shown in FIG. 13, the network interface 1004 is configured to perform network communication, the user interface 1003 is configured to provide an input interface for a user, and the processor 1001 may be configured to invoke the device-control application stored in the memory 1005 to implement the following operations:

performing, when a to-be-detected image is obtained, image detection on a portion of the to-be-detected image to obtain a candidate box set, the candidate box set including a candidate box for marking an image detection result;

deduplicating a candidate box in the candidate box set based on the to-be-detected image to obtain a to-be-processed box set, performing position correction on a candidate box in the to-be-processed box set to obtain an adjusted box, and generating, based on the adjusted box, an adjusted box set and a cropped image set corresponding to the adjusted box set, the cropped image set including N cropped images, a cropped image being obtained by cropping the to-be-detected image based on an adjusted box in the adjusted box set, and N being a positive integer;

performing recognition and segmentation on each of the N cropped images to obtain a segmentation result associated with the portion, the segmentation result including M segmented images, and M being a positive integer less than or equal to N; and

separately correcting, based on coordinate positions of the M segmented images, adjusted boxes in the adjusted box set that correspond to the M segmented images, to obtain M corrected boxes indicating the portion of the to-be-detected image.

The computer device 1000 described in all embodiments of the disclosure may perform the descriptions of the image processing method in the embodiments corresponding to FIG. 3, FIG. 9, FIG. 10, and FIG. 11, or may perform the descriptions of the image processing apparatus 1 in the embodiments corresponding to FIG. 12. Beneficial effects of the same method are not described herein again.

The embodiments of the disclosure further provide a computer-readable storage medium. The computer-readable storage medium has a computer program stored therein. The computer program includes program instructions. When the program instructions are executed by a processor, the image processing method provided in the operations in FIG. 3, FIG. 9, FIG. 10, and FIG. 11 is implemented. Refer to the embodiments provided in the operations in FIG. 3, FIG. 9, FIG. 10, and FIG. 11.

The computer-readable storage medium may be an internal storage unit of the data transmission apparatus or the computer device provided in any one of the embodiments, for example, a hard disk or an internal memory of the computer device. The computer-readable storage medium may be an external storage device of the computer device, for example, a plug-in hard disk, a smart media card (SMC), a secure digital (SD) card, or a flash card that is deployed in the computer device. The computer-readable storage medium may include both an internal storage unit and an external storage device of the computer device. The computer-readable storage medium is configured to store the computer program and other programs and data that are used by the computer device. The computer-readable storage medium may be further configured to temporarily store data that has been output or is to be output.

The embodiments of the disclosure further provide a computer program product, including a computer program. The computer program is stored in a computer-readable storage medium. A processor of a computer device reads the computer program from the computer-readable storage medium. The processor executes the computer program, to cause the computer device to perform the descriptions of the image processing method or apparatus in the embodiments. Beneficial effects of the same method are not described herein again.

In the specification, claims, and accompanying drawings of embodiments of the disclosure, the terms "first", "second", and the like are intended to distinguish between different objects but do not indicate a particular order. The terms "include" and any variant thereof are intended to cover a non-exclusive inclusion. For example, a process, a method, an apparatus, a product, or a device that includes a series of operations or units is not limited to the listed operations or modules, and in some embodiments, further includes other unlisted operations or modules, or further includes other inherent operations or units of the process, the method, the apparatus, the product, or the device.

A person of ordinary skill in the art may be aware that, in combination with the examples described in the embodiments disclosed in this specification, units and algorithm operations can be implemented by electronic hardware, computer software, or a combination thereof. To clearly describe interchangeability between hardware and software, the foregoing describes compositions and operations of the examples based on functions. Whether the functions are performed by hardware or software depends on particular applications and design constraints of the technical solutions. A person skilled in the art may use different methods to implement the described functions for each particular application, but it is not to be considered that the implementation goes beyond the scope of the disclosure.

What is disclosed above are exemplary embodiments of the disclosure, and certainly is not intended to limit the scope of the claims of the disclosure. Therefore, equivalent variations made in accordance with the claims of the disclosure shall fall within the scope of the disclosure.

**Claims**

1. An image processing method, comprising:

   obtaining an image, and performing image detection on a first portion of the image to obtain a first box set including at least one first candidate box each marking one region associated with the first portion;
   deduplicating the at least one first candidate box based on the image to obtain a second box set including at least one second candidate box, performing position correction on each of the at least one second candidate box to obtain at least one adjusted box, and generating, based on the at least one adjusted box, a third box set including the at least one adjusted box and a cropped image set corresponding to the third box set, the cropped image set including at least one cropped image that is obtained by cropping the image based on the at least one adjusted box, a total quantity of the at least one cropped image is N, and N being a positive integer;
   performing recognition and segmentation on each of the at least one cropped image to obtain M segmented images associated with the first portion, and M being a positive integer less than or equal to N; and
   correcting, based on coordinate positions of the M segmented images, adjusted boxes in the third box set that correspond to the M segmented images, to generate M corrected boxes indicating the first portion.

2. The method according to claim 1, wherein before performing the image detection on the first portion of the image to obtain the first box set, the method further comprises:

   obtaining a first sample image for training a first detection model, and a first sample label indicating a category of the first sample image, the first sample image being obtained by preprocessing a second portion of a raw sample image;
   invoking the first detection model to perform image detection on the first sample image to obtain a predicted category confidence of the first sample image for the second portion; and
   training the first detection model based on the predicted category confidence of the first sample image and the category of the first sample image to obtain an image detection model for performing the image detection on the first portion; and

wherein the performing the image detection on the first portion of the image to obtain the first box set comprises: performing the image detection on the first portion by using the image detection model to obtain the first box set.

3. The method according to claim 1 or 2, wherein the training the first detection model based on the predicted category confidence of the first sample image and the category of the first sample image to obtain the image detection model comprises:

calculating a loss based on the predicted category confidence of the first sample image and the category of the first sample image to determine a model loss of the first detection model;

training the first detection model based on the model loss of the first detection model to obtain a first model training result;

based on the first model training result indicating that the first detection model satisfies a first model convergence condition, using the first detection model as a second detection model; and

analyzing a network structure of the second detection model to obtain an analysis result, and generating the image detection model based on the analysis result and the second detection model.

4. The method according to any one of claims 1 to 3, wherein the analyzing the network structure of the second detection model to obtain the analysis result, and generating the image detection model based on the analysis result and the second detection model comprises:

analyzing the network structure of the second detection model to obtain the analysis result;

based on the analysis result indicating that the network structure of the second detection model includes a fully connected layer, replacing the fully connected layer with a first convolutional layer including a sliding step;

assigning a value to the first convolutional layer based on a network parameter of the fully connected layer to obtain a second convolutional layer; and

determining the second detection model including the second convolutional layer as the image detection model.

5. The method according to any one of claims 1 to 4, wherein the deduplicating the at least one first candidate box based on the image to obtain the second box set including the at least one second candidate box, performing position correction on each of the at least one second candidate box to obtain the at least one adjusted box, and generating, based on the at least one adjusted box, the third box set including the at least one adjusted box and the cropped image set corresponding to the third box set comprises:

deduplicating the at least one first candidate box according to a deduplication rule based on shape-adaptive NMS to obtain the second box set including the at least one second candidate box, the at least one second candidate box including a candidate box $X_i$, i being a positive integer less than or equal to H, and H being configured for indicating a total quantity of the at least one second candidate boxes;

invoking an image offset adjustment model to perform the position correction on the candidate box $X_i$ by using the image to obtain an adjusted box $Y_i$ and a cropped image corresponding to the adjusted box $Y_i$;

after obtaining H adjusted boxes, deduplicating the H adjusted boxes according to the deduplication rule; and determining the third box set based on one or more adjusted boxes obtained through deduplicating the H adjusted boxes, and determining the cropped image set based on one or more cropped images corresponding to the one or more adjusted boxes.

6. The method according to any one of claims 1 to 5, wherein the first box set is obtained by invoking the image detection model to perform the image detection on the first portion, the first box set includes K candidate boxes, wherein K is a positive integer, and the image detection model is further configured to determine a predicted category confidence corresponding to each of the K candidate boxes; and

wherein the deduplicating the at least one first candidate box according to the deduplication rule to obtain the second box set comprises:

cropping the K candidate boxes based on an image cropping rate determined based on the deduplication rule to obtain K cropped boxes;

sorting the K cropped boxes based on K predicted category confidences to obtain a sorting result;

determining a first cropped box with a highest predicted category confidence in the sorting result, and determining (K-1) cropped boxes other than the first cropped box in the sorting result as a fourth set;

deduplicating the K cropped boxes based on an overlapping degree between the first cropped box and each cropped box in the fourth set to obtain a fifth box set; and

performing image expansion on each cropped box in the fifth box set based on the image cropping rate to obtain the second box set.

7. The method according to any one of claims 1 to 6, wherein the deduplicating the K cropped boxes based on the overlapping degree between the first cropped box and each cropped box in the fourth set to obtain the fifth box set comprises:

retaining the first cropped box, and determining the overlapping degree between the first cropped box and each cropped box in the fourth set;

based on the fourth set including an overlapping cropped box with an overlapping degree greater than an overlapping degree threshold, filtering the fourth set to remove the overlapping cropped box;

determining a second cropped box with a highest predicted category confidence in the filtered fourth set, and determining a sixth set that includes one or more cropped boxes other than the second cropped box in the filtered fourth set; and

retaining the second cropped box, and continuing to deduplicate the one or more cropped boxes in the sixth set based on an overlapping degree between the second cropped box and each cropped box in the sixth set until the sixth set is empty, and determining the fifth box set including the retained cropped boxes, wherein the fifth box set includes the first cropped box and the second cropped box.

8. The method according to any one of claims 1 to 7, wherein the invoking the image offset adjustment model to perform the position correction on the candidate box $X_i$ by using the image to obtain the adjusted box $Y_i$ and the cropped image corresponding to the adjusted box $Y_i$ comprises:

invoking the image offset adjustment model to perform offset prediction on the candidate box $X_i$ by using the image to obtain a first regression parameter;

performing position correction on the candidate box $X_i$ based on the first regression parameter to obtain a first adjusted box corresponding to the candidate box $X_i$;

based on the first regression parameter belonging to a regression parameter threshold range, determining the first adjusted box as the adjusted box $Y_i$ corresponding to the candidate box $X_i$; and

cropping the image based on a coordinate position of the adjusted box $Y_i$ to obtain the cropped image corresponding to the adjusted box $Y_i$.

9. The method according to any one of claims 1 to 8, wherein after obtaining the first adjusted box corresponding to the candidate box $X_i$, the method further comprises:

based on the first regression parameter not belonging to the regression parameter threshold range, invoking the image offset adjustment model to perform, by using the image, offset prediction on the first adjusted box to obtain a second regression parameter;

performing, based on the second regression parameter, position correction on the first adjusted box to obtain a second adjusted box corresponding to the candidate box $X_i$; and

based on the second regression parameter belonging to the regression parameter threshold range, determining the second adjusted box as the adjusted box $Y_i$ corresponding to the candidate box $X_i$.

10. The method according to any one of claims 1 to 9, wherein before invoking the image offset adjustment model, the method further comprises:

obtaining a second sample image for training an initial offset adjustment model, and a second sample label indicating a coordinate position of a third portion of the second sample image;

invoking the initial offset adjustment model to perform offset prediction on the second sample image to obtain a predicted regression parameter of the second sample image;

performing position correction on a coordinate position of the second sample image based on the predicted regression parameter to obtain a predicted coordinate position of the second sample image;

training the initial offset adjustment model based on the predicted coordinate position and the coordinate position of the third portion to obtain a second model training result; and

based on the second model training result indicating that the initial offset adjustment model satisfies a second model convergence condition after being trained, determining the initial offset adjustment model as the image offset adjustment model.

11. The method according to any one of claims 1 to 10, wherein the performing the recognition and segmentation on each of the N cropped images to obtain M segmented images associated with the first portion comprises:

determining a cropped image from the N cropped images;

invoking an image recognition and segmentation model to perform recognition on the cropped image by using an image classification branch in the image recognition and segmentation model to obtain a predicted category confidence of the cropped image;

eliminating a non-salient portion in the cropped image by using an image segmentation branch in the image recognition and segmentation model to obtain a segmented image corresponding to the cropped image; and

based on the predicted category confidence of the cropped image being greater than a confidence threshold, determining the segmented image corresponding to the cropped image as the segmented image associated with the first portion.

12. The method according to any one of claims 1 to 11, wherein before invoking the image recognition and segmentation model, the method further comprises:

obtaining sample data for training an initial recognition and segmentation model, and a sample label corresponding to the sample data;

training a public network layer and an image segmentation branch in the initial recognition and segmentation model based on a third sample image in the sample data and a third sample label indicating a mask image of the third sample image, to obtain a first recognition and segmentation model;

training a public network layer and an image classification branch in the first recognition and segmentation model based on a fourth sample image in the sample data and a fourth sample label indicating a category of the fourth sample image, to obtain a second recognition and segmentation model;

training a public network layer and an image segmentation branch in the second recognition and segmentation model based on the third sample image and the third sample label to obtain a third recognition and segmentation model; and

locking a public network layer and an image segmentation branch in the third recognition and segmentation model, and training, based on the fourth sample image and the fourth sample label, an image classification branch in the locked third recognition and segmentation model, to obtain the image recognition and segmentation model.

13. The method according to any one of claims 1 to 12, wherein the training the public network layer and the image segmentation branch in the second recognition and segmentation model based on the third sample image and the third sample label to obtain the third recognition and segmentation model comprises:

invoking the second recognition and segmentation model to eliminate a non-salient portion in the third sample image to obtain a predicted mask image corresponding to the third sample image;

traversing pixels of the third sample image, and determining a traversed pixel as a to-be-processed pixel;

determining a confidence of the to-be-processed pixel in the mask image indicated by the third sample label as a first confidence, and determining a confidence of the to-be-processed pixel in the predicted mask image as a second confidence;

calculating a loss based on the first confidence and the second confidence to determine a model loss of the second recognition and segmentation model;

training the public network layer and the image segmentation branch in the second recognition and segmentation model based on the model loss of the second recognition and segmentation model to obtain a third model training result; and

based on the third model training result indicating that the second recognition and segmentation model satisfies a first branch convergence condition in a third model convergence condition, determining the second recognition and segmentation model as the third recognition and segmentation model.

14. The method according to any one of claims 1 to 13, wherein the locking the public network layer and the image segmentation branch in the third recognition and segmentation model, and training, based on the fourth sample image and the fourth sample label, the image classification branch in the locked third recognition and segmentation model, to obtain the image recognition and segmentation model comprises:

locking the public network layer and the image segmentation branch in the third recognition and segmentation model, and determining the locked third recognition and segmentation model as a fourth recognition and segmentation model;

invoking the fourth recognition and segmentation model to perform recognition on the fourth sample image to determine a sample prediction confidence corresponding to the fourth sample image;

calculating a loss based on the category indicated by the fourth sample label and the sample prediction confidence to determine a model loss of the fourth recognition and segmentation model;

training an image classification branch in the fourth recognition and segmentation model based on the model loss of the fourth recognition and segmentation model to obtain a fourth model training result; and

based on the fourth model training result indicating that the fourth recognition and segmentation model satisfies a second branch convergence condition in the third model convergence condition, determining the fourth recognition and segmentation model as the image recognition and segmentation model.

15. An image processing apparatus, comprising:

an image detection module, configured to obtain an image, and perform image detection on a first portion of the image to obtain a first box set including at least one first candidate box each marking one region associated with the first portion;

a deduplication and adjustment module, configured to deduplicate the at least one first candidate box based on the image to obtain a second box set including at least one second candidate box, perform position correction on each of the at least one second candidate box to obtain at least one adjusted box, and generate, based on the at least one adjusted box, a third box set including the at least one adjusted box and a cropped image set corresponding to the third box set, the cropped image set including at least one cropped image that is obtained by cropping the image based on the at least one adjusted box, a total quantity of the at least one cropped image is N, and N being a positive integer;

a recognition and segmentation module, configured to perform recognition and segmentation on each of the at least one cropped image to obtain M segmented images associated with the first portion, and M being a positive integer less than or equal to N; and

a correction module, configured to correct, based on coordinate positions of the M segmented images, adjusted boxes in the third box set that correspond to the M segmented images, to generate M corrected boxes indicating the first portion.

16. A computer device, comprising: a processor, a memory, and a network interface,
the processor being connected to the memory and the network interface, the network interface being configured to provide a data communication function, the memory being configured to store a computer program, and the processor being configured to invoke the computer program, to cause the computer device to perform the method according to any one of claims 1 to 14.

17. A computer-readable storage medium, the computer-readable storage medium having a computer program stored therein, and the computer program being adapted to be loaded and executed by a processor, to cause a computer device with the processor to perform the method according to any one of claims 1 to 14.

18. A computer program product, the computer program product comprising a computer program, the computer program being stored in a computer-readable storage medium, and adapted to be read and executed by a processor, to cause a computer device with the processor to perform the method according to any one of claims 1 to 14.

10F

100a

100b

100c

100n

FIG. 1

200p

Perform image detection on a portion of the image 200p to obtain a candidate box set

$21B_1$
$21B_2$
$21B_3$
$21B_4$
$21B_5$
$21B_6$
$21B_7$

Perform deduplication and offset adjustment on the candidate box set based on the image 200p to obtain an adjusted box set and a cropped image set

Segmentation result

$P_1$
$P_2$

$22B_1$
$22B_2$
$22B_3$

Correct an adjusted box, in the adjusted box set, that corresponds to a segmented image

$23B_1$
$23B_2$

FIG. 2

Obtain an image, and perform image detection on a first portion of the image to obtain a first box set including at least one first candidate box each marking one region associated with the first portion

S101

Deduplicate the at least one first candidate box based on the image to obtain a second box set including at least one second candidate box, perform position correction on each of the at least one second candidate box to obtain at least one adjusted box, and generate, based on the at least one adjusted box, a third box set including the at least one adjusted box and a cropped image set corresponding to the third box set

S102

Perform recognition and segmentation on each of the at least one cropped image to obtain M segmented images associated with the first portion

S103

Correct, based on coordinate positions of the M segmented images, adjusted boxes in the third box set that correspond to the M segmented images, to generate M corrected boxes indicating the first portion

S104

FIG. 3

400p

Input

40W

**Image detection model**

| $4L_1$ Convolutional layer | $4L_2$ Max pooling layer | $4L_3$ Normalization layer | $4L_4$ Convolutional layer | $4L_5$ Normalization layer | $4L_6$ Max pooling layer | $4L_7$ Network layer | $4L_8$ Output layer |

Output

$40B_1$
$40B_2$
$40B_3$

FIG. 4

500p

50B₄

50B₅

50B₁

50B₂

50B₃

Crop each candidate box to
obtain a cropped box set

Sort cropped boxes in the
cropped box set based on a
predicted category confidence

| Cropped box 51B₁ | Cropped box 51B₄ | Cropped box 51B₂ | Cropped box 51B₃ | Cropped box 51B₅ |

Perform deduplication to
obtain a retained box set

| Cropped box 51B₁ | Cropped box 51B₄ |

Perform image expansion to
obtain a to-be-processed box set

52B₄

52B₁

**FIG. 5**

FIG. 6

FIG. 7

FIG. 8

Obtain a first sample image for training a first detection model, and a first sample label indicating a category of the first sample image — S201

Invoke the first detection model to perform image detection on the first sample image to obtain a predicted category confidence of the first sample image for the second portion — S202

Invoke the first detection model to perform image detection on the first sample image to obtain a predicted category confidence of the first sample image for the second portion — S203

FIG. 9

| | |
|---|---|
| Obtain a second sample image for training an initial offset adjustment model, and a second sample label indicating a coordinate position of a third portion of the second sample image | S301 |

| | |
|---|---|
| Invoke the initial offset adjustment model to perform offset prediction on the second sample image to obtain a predicted regression parameter of the second sample image | S302 |

| | |
|---|---|
| Invoke the initial offset adjustment model to perform offset prediction on the second sample image to obtain a predicted regression parameter of the second sample image | S303 |

| | |
|---|---|
| Train the initial offset adjustment model based on the predicted coordinate position and the coordinate position of the third portion to obtain a second model training result | S304 |

| | |
|---|---|
| Based on the second model training result indicating that the initial offset adjustment model satisfies a second model convergence condition after being trained, determine the initial offset adjustment model as the image offset adjustment model | S305 |

FIG. 10

Obtain sample data for training an initial recognition and segmentation model, and a sample label corresponding to the sample data — S401

Train a public network layer and an image segmentation branch in the initial recognition and segmentation model based on the third sample image in the sample data and the third sample label indicating a mask image of the third sample image, to obtain a first recognition and segmentation model — S402

Train a public network layer and an image classification branch in the first recognition and segmentation model based on a fourth sample image in the sample data and a fourth sample label indicating a category of the fourth sample image, to obtain a second recognition and segmentation model — S403

Train a public network layer and an image segmentation branch in the second recognition and segmentation model based on the third sample image and the third sample label to obtain a third recognition and segmentation model — S404

Lock a public network layer and an image segmentation branch in the third recognition and segmentation model, and train, based on the fourth sample image and the fourth sample label, an image classification branch in the locked third recognition and segmentation model, to obtain the image recognition and segmentation model — S405

FIG. 11

FIG. 12

1000

1005

1001

Communication
bus 1002

Processor

Operating system

Network
communication module

User interface module

Device-control
application

1003

1004

User interface

Display

Keyboard

Network
interface

Memory

Computer device

FIG. 13

## INTERNATIONAL SEARCH REPORT

| | International application No. |
|---|---|
| | **PCT/CN2024/087039** |

| A. | CLASSIFICATION OF SUBJECT MATTER |
|---|---|

G06V 10/25(2022.01)i

According to International Patent Classification (IPC) or to both national classification and IPC

| B. | FIELDS SEARCHED |
|---|---|

Minimum documentation searched (classification system followed by classification symbols)

IPC: G06V, G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 图象, 关键, 候选, 边界, 边, 矩形, 检测, 框, 区, 偏移, 移位, 校正, 纠正, 调整, 矫正, 修正, 二次, 再, 多, 重叠, 去重, 冗余, images, key, candidate, edge, bounding, box, region, shift, correct, check, adjust, again, twice, two, overlap, redundant

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116543145 A (TENCENT TECHNOLOGY (SHENZHEN) CO., LTD.) 04 August 2023 (2023-08-04)<br>description, paragraphs [0040]-[0292], and figures 1-13 | 1-18 |
| A | CN 112052787 A (TENCENT TECHNOLOGY (SHENZHEN) CO., LTD.) 08 December 2020 (2020-12-08)<br>description, paragraphs [0049]-[0204], and figures 1-9 | 1-18 |
| A | CN 109492576 A (MEGVII TECHNOLOGY LTD.) 19 March 2019 (2019-03-19)<br>entire document | 1-18 |
| A | CN 113642510 A (BEIJING JINGDONG QIANSHI TECHNOLOGY CO., LTD.) 12 November 2021 (2021-11-12)<br>entire document | 1-18 |
| A | WO 2022252565 A1 (ZHEJIANG SMART VIDEO SECURITY INNOVATION CENTER CO., LTD.) 08 December 2022 (2022-12-08)<br>entire document | 1-18 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 June 2024** | **27 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/087039** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 102274913 B1 (SEOUL NATIONAL UNIVERSITY R&DB FOUNDATION et al.) 08 July 2021 (2021-07-08)<br>entire document | 1-18 |

Form PCT/ISA/210 (second sheet) (July 2022)

INTERNATIONAL SEARCH REPORT
Information on patent family members

International application No.

**PCT/CN2024/087039**

| Patent document cited in search report | | | Publication date (day/month/year) | Patent family member(s) | | | Publication date (day/month/year) |
|---|---|---|---|---|---|---|---|
| CN | 116543145 | A | 04 August 2023 | None | | | |
| CN | 112052787 | A | 08 December 2020 | HK | 40035307 | A0 | 14 May 2021 |
| CN | 109492576 | A | 19 March 2019 | None | | | |
| CN | 113642510 | A | 12 November 2021 | None | | | |
| WO | 2022252565 | A1 | 08 December 2022 | CN | 113255682 | A | 13 August 2021 |
| KR | 102274913 | B1 | 08 July 2021 | None | | | |

Form PCT/ISA/210 (patent family annex) (July 2022)

**EP 4 685 754 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310572375